# EUROPÄISCHE PATENTSCHRIFT

(11) **EP 2 113 527 B1**
(45) Veröffentlichungstag und Bekanntmachung des Hinweises auf die Patenterteilung: **21.05.2014**
(21) Anmeldenummer: 09005614.4
(22) Anmeldetag: 22.04.2009
(51) Int. Cl.: C08J 7/04, C08J 5/10, C08J 5/18, C08K 3/00, C08L 75/14

(54) **Verformbare Folie mit strahlungshärtbarer Beschichtung und hieraus hergestellte Formkörper**
Reformable film with radiation-hardenable coating and form body made of same
Feuille déformable dotée d'un revêtement durcissable au rayonnement et corps de formage ainsi fabriqués

(30) Priorität: 28.04.2008 DE 102008021152
(43) Veröffentlichungstag der Anmeldung: 04.11.2009
(73) Patentinhaber: Bayer Intellectual Property GmbH, 40789 Monheim (DE)
(72) Erfinder: Kuhlmann, Timo, 47798 Krefeld (DE); Meyer, Klaus, 41539 Dormagen (DE); Sommer, Stefan Dr., 51375 Leverkusen (DE); Luehmann, Erhard, 29699 Bomlitz (DE); Weikard, Jan Dr., 51519 Odenthal-Erberich (DE)
(74) Vertreter: BIP Patents

(56) Entgegenhaltungen:
- EP-A- 1 790 673
- WO-A-02/41041
- WO-A-2009/005970
- WO-A-2009/069974
- DE-A1-102007 020 474
- US-A1- 2006 286 382
- US-A1- 2007 166 548
- US-A1- 2008 017 071

## Beschreibung

Die vorliegende Erfindung betrifft eine Folie, weiterhin umfassend eine strahlungshärtbare Beschichtung, wobei die Beschichtung ein Polyurethanpolymer umfasst, welches (Meth)acrylatgruppen aufweist, und anorganische Nanopartikel. Sie betrifft weiterhin ein Verfahren zur Herstellung solcher beschichteter Folien, die Verwendung solcher Folien zur Herstellung von Formkörpern, ein Verfahren zur Herstellung von Formkörpern mit einer strahlungsgehärteten Beschichtung sowie nach diesem Verfahren herstellbare Formkörper.

Es sind Verfahren bekannt, bei denen zunächst eine Kunststofffolie mittels gängiger Lackierverfahren wie Rakeln oder Spritzen großflächig beschichtet wird und diese Beschichtung durch physikalische Trocknung oder Teilhärtung nahezu klebfrei antrocknet. Diese Folie kann dann bei erhöhten Temperaturen verformt und anschließend verklebt, hinterspritzt oder hinterschäumt werden. Dieses Konzept bietet viel Potential für die Herstellung zum Beispiel von Bauteilen durch Kunststoffverarbeiter, wobei der aufwendigere Lackierschritt dreidimensionaler Bauteile durch die einfachere Beschichtung eines flächigen Substrats ersetzt werden kann.

In aller Regel setzen gute Oberflächeneigenschaften eine hohe Vernetzungsdichte der Beschichtung voraus. Hohe Vernetzungsdichten führen aber zu duromerem Verhalten mit maximal möglichen Verstreckungsgraden von nur wenigen Prozent, so dass die Beschichtung während des Verformvorganges zur Rissbildung neigt. Dieser offensichtliche Konflikt zwischen erforderlicher hoher Vemetzungsdichte und angestrebtem hohen Verstreckungsgrad kann gelöst werden, zum Beispiel indem die Trocknung/Härtung der Beschichtung in zwei Schritten, vor und nach der Verformung, durchgeführt wird. Insbesondere geeignet für eine Nachhärtung ist eine strahlungsinduzierte Vernetzungsreaktion in der Beschichtung.

Darüber hinaus ist für eine wirtschaftliche Anwendung dieses Verfahrens das zwischenzeitliche Aufwickeln der beschichteten, verformbaren Folie auf Rollen notwendig. Die dabei in den Rollen auftretenden Druck- und Temperaturbelastungen, stellen besondere Anforderungen an die Blockfestigkeit der Beschichtung.

WO 2005/080484 A1 beschreibt eine strahlungshärtbare Verbundschichtplatte oder -folie aus mindestens einer Substratschicht und einer Deckschicht, die eine strahlungshärtbare Masse mit einer Glasübergangstemperatur unter 50 °C mit hoher Doppelbindungsdichte enthält.

WO 2005/118689 A1 offenbart eine analoge Verbundschichtplatte oder -folie, bei der die strahlungshärtbare Masse zusätzlich Säuregruppen enthält. Beide Anmeldungen beschreiben die Deckschicht als nicht klebend, eine höhere Blockfestigkeit, wie zum Beispiel für das Aufrollen der Folie um einen Kern benötigt wird, wird nicht erreicht. Die Möglichkeit, die Verbundfolien vor der Strahlungshärtung der Deckschicht zu Rollen aufzuwickeln, wird daher auch nicht erwähnt.

WO 2005/099943 A2 beschreibt einen flexiblen Schichtverbund mit einem Träger und mindestens einer auf den Träger aufgebrachten Schicht härtbaren Lackes, bei dem die Schicht härtbaren Lacks ein doppelbindungshaltiges Bindemittel mit einer Doppelbindungsdichte zwischen 3 mol/kg und 6 mol/kg, mit einer Glasübergangstemperatur Tg zwischen -15°C bis 20 °C und einem Festkörperanteil zwischen 40% und 100% aufweist, der nach thermischer Trocknung nicht klebrig ist. Die Schrift lehrt, dass die Beschichtung aufgrund der niedrigen Tg staubanfällig sein kann. Im Beispiel wird ein Trocknungsgrad/eine Blockfestigkeit der Beschichtung vor der Strahlungshärtung erreicht, bei der nach einer Belastung von 500 g/cm² für 60 s bei 10 °C noch Abprägungen eines Filterpapiers sichtbar sind. Die Belastungen auf eine Beschichtung in einer Folienrolle sind Druck und Temperatur betreffend üblicherweise höher. Die Möglichkeit, die Folien vor der Strahlungshärtung des Lacks auf Rollen aufzuwickeln, wird daher auch in dieser Schrift nicht erwähnt.

Alle zuvor zitierten Anmeldungen erwähnen zudem nicht die Verwendung von nano-skaligen Partikeln als Bestandteil der strahlungshärtbaren Beschichtung.

US 2008/017071 A1 beschreibt wässrige Bindemitteldispersionen die polymere oder oligomere Bindemittel sowie von polymeren Nanopartikeln umschlossene anorganische Nanopartikel enthalten und für Beschichtungen eingesetzt werden. US 2008/017071 A1 offenbart jedoch, dass für den Fall, dass es sich bei dem Bindemittel um ein Polyurethan handelt, dieses ein Molekulargewicht von nur 5.000 bis 50.000 g/mol aufweist.

WO 2002/041041 A offenbart eine optisch aktive Folie mit einem polymeren Substrat beschichtet mit einer Schicht, die 30-60 Gew.% Nanopartikel enthält, wobei für die nanopartikulären Metallverbindungen lediglich Indium-Zinn-Oxid, Antimon dotiertes Zinnoxid sowie Metallhexaboride offenbart werden.

DE 10 2007 020474 A1 beschreibt eine UV-härtbare Grundierung unter ausschließlicher Verwendung von Bariumsulfat-Nanopartikeln.

US 2006/286382 A1 offenbart Gegenstände, die eine gehärtete Schicht mit Nanopartikeln auf einer Trägerfolie aufweisen und beschreibt den Einsatz eines Urethanacrylat-Oligomeren in der Schicht. Zur Definition des Begriffs "Oligomer" wird offenbart, dass es sich dabei um Polymere mit 2 bis 10 Wiederholungseinheiten handelt.

WO 2009/005970 A beschreibt beschichtete Substrate und als geeignete Substrate lediglich Polyester und Polyolefine, wobei lediglich PET, PEN und PBT explizit genannt werden.

WO 2006/008120 A1 offenbart eine wässrige Dispersion aus nanoskaligen Polymerpartikeln aus organischen Bindemitteln, wobei in diesen Nanopartikeln als hochdisperse Phase enthalten sind, weiterhin Wasser und/oder eine wässrige kolloidale Lösung eines Metalloxids als kontinuierliche Phase sowie gegebenenfalls Zusatzstoffe und Additive. Verwendung finden derartige wässrige Zusammensetzungen als Lackzusammensetzung zu Beschichtungszwecken.

Auf die Trocknungseigenschaften dieser Systeme wird nicht eingegangen, aufgrund der niedrigen Molekulargewichte insbesondere für die Polyurethansysteme ist aber von nur geringen Blockfestigkeiten auszugehen. Die Verwendung dieser Systeme zur Beschichtung von Folien wird nicht erwähnt.

Ebenfalls finden sich in dieser Schrift keine Hinweise darauf, wie sich eine solche Dispersion verhält, wenn sie auf eine thermoplastische Folie aufgetragen wird und die Folie verformt wird. Solche Beschichtungen müssen insbesondere eine ausreichende Haftung auf dem Foliensubstrat aufweisen. Weiter von Vorteil ist, wie bereits erwähnt, eine möglichst hohe Blockfestigkeit, damit die beschichtete, aber ungehärtete Folie auf Rollen aufgewickelt werden kann.

Im Stand der Technik besteht folglich weiterhin der Bedarf an verbesserten oder zumindest alternativen Folien mit strahlungshärtenden Beschichtungen. Wünschenswert wären solche Folien, bei denen die Beschichtung nach dem Verformen und Härten eine hohe Abriebbeständigkeit bei gleichzeitig guter Haftung auf der Folie zeigt. Unabhängig davon wären weiterhin verbesserte oder zumindest alternative Folien wünschenswert, bei der die Beschichtung vor dem Verformen eine so hohe Blockfestigkeit aufweist, dass sich die Folie problemlos aufrollen lässt, aber sich trotzdem hohe Verstreckungsgrade im Verformungsprozess erzielen lassen.

Die vorliegende Erfindung hat sich die Aufgabe gestellt, die Nachteile im Stand der Technik zumindest teilweise zu beheben. Insbesondere hat sie sich die Aufgabe gestellt, verbesserte oder zumindest alternative Folien mit strahlungshärtenden Beschichtungen bereitzustellen.

Erfindungsgemäß vorgeschlagen wird daher eine Folie, ausgewählt aus thermoplastischem Polyurethan, Polymethylmethacrylat (PMMA) sowie modifizierte Varianten von PMMA, Polycarbonat (PC), Acrylnitril-Styrol-Acrylester-Copolymerisaten (ASA) und AcrylnitrilButadien-Styrol-Copolymerisaten (ABS), weiterhin umfassend eine strahlungshärtbare Beschichtung, wobei die Beschichtung ein Polyurethanpolymer umfasst, welches (Meth)acrylatgruppen aufweist und welches erhältlich ist aus der Reaktion einer Reaktionsmischung umfassend:
(a) Polyisocyanate und
(b1) (Meth)acrylatgruppen umfassende und gegenüber Isocyanaten reaktive Verbindungen
wobei das Gewichtsmittel Mw des Polyurethanpolymers bestimmt mittels Gelpermeationschromatographie in einem Bereich von ≥ 250000 g/mol bis ≤ 350000 g/mol liegt und die Beschichtung weiterhin anorganische Nanopartikel ausgewählt aus der Gruppe der Oxide Siliziumoxid, Aluminiumoxid, Ceroxid, Zirkonoxid, Nioboxid und Titanoxid mit einer mittleren Teilchengröße bestimmt mittels dynamischer Lichtstreuung mit einem High Performance Particle Sizer (HPPS) von ≥ 1 nm bis ≤ 200 nm umfasst.

Solche Folien können beispielsweise zur Herstellung von Formkörpern eingesetzt werden, welche Strukturelemente mit sehr kleine Krümmungsradien aufweisen. Die Beschichtungen weisen nach der Härtung eine gute Abriebfestigkeit und Chemikalienbeständigkeit auf.

Die erfindungsgemäß einzusetzende Folie besitzt vorteilhafterweise neben der geforderten allgemeinen Beständigkeit vor allem die nötige thermische Verformbarkeit. Prinzipiell geeignet sind daher insbesondere thermoplastische Polymere wie ABS, AMMA, ASA, CA, CAB, EP, UF, CF, MF, MPF, PF, PAN, PA, PE, HDPE, LDPE, LLDPE, PC, PET, PMMA, PP, PS, SB, PUR, PVC, RF, SAN, PBT, PPE, POM, PP-EPDM, und UP (Kurzbezeichnungen nach DIN 7728T1) sowie ihre Mischungen, weiterhin Verbundfolien aufgebaut aus zwei oder mehr Schichten dieser Kunststoffe. Allgemein können die erfindungsgemäß einzusetzenden Folien auch verstärkende Fasern oder Gewebe enthalten, sofern diese die erwünschte thermoplastische Verformung nicht beeinträchtigen.

Besonders geeignet sind thermoplastische Polyurethane, Polymethylmethacrylat (PMMA) sowie modifizierte Varianten von PMMA, weiterhin Polycarbonat (PC), ASA, PET, PP, PP-EPDM und ABS.

Die Folie oder auch Platte wird bevorzugt in einer Dicke von ≥ 10 µm bis ≤ 1500 µm, mehr bevorzugt von ≥ 50 µm bis ≤ 1000 µm und besonders bevorzugt von ≥ 200 µm bis ≤ 400 µm verwendet. Zusätzlich kann das Material der Folie Additive und/oder Prozesshilfsmittel zur Folienherstellung enthalten, wie zum Beispiel Stabilisatoren, Lichtschutzmittel, Weichmacher, Füllstoffe wie Fasern und Farbstoffe enthalten. Die zur Beschichtung vorgesehene sowie die andere Seite der Folie kann glatt sein oder eine Oberflächenstruktur aufweisen, wobei eine glatte Oberfläche der zu beschichtenden Seite bevorzugt ist.

In einer Ausführungsform ist die Folie eine Polycarbonatfolie mit einer Dicke von ≥ 10 µm bis ≤ 1500 µm. Hierunter ist ebenfalls eine Polycarbonatfolie mit den vorgenannten Additiven und/oder Prozesshilfsmitteln eingeschlossen. Die Dicke der Folie kann auch ≥ 50 µm bis ≤ 1000 µm oder ≥ 200 µm bis ≤ 400 µm betragen.

Die Folie kann ein- oder beidseitig beschichtet sein, wobei das einseitige Beschichten bevorzugt wird. Im Falle einseitiger Beschichtung kann auf der Rückseite der Folie, also auf der Oberfläche, auf der das Beschichtungsmittel nicht aufgebracht wird, optional eine thermisch verformbare Klebstoffschicht aufgebracht sein. Hierzu eignen sich je nach Vorgehensweise bevorzugt Schmelzklebstoffe oder strahlungshärtende Klebstoffe. Zusätzlich kann auf der Oberfläche der Klebeschicht noch eine Schutzfolie aufgebracht werden, die ebenfalls thermisch verformbar ist. Weiterhin ist es möglich, die Folie rückseitig mit Trägermaterialien wie Geweben auszustatten, die jedoch im gewünschten Maße verformbar sein sollten.

Optional kann die Folie vor oder nach dem Auftragen der strahlungshärtbaren Schicht mit einer oder mehreren Schichten lackiert oder bedruckt werden. Dieses kann auf der beschichteten oder auf der unbeschichteten Seite der Folie erfolgen. Die Schichten können farb- oder funktionsgebend sein, vollflächig oder nur teilweise, zum Beispiel als Druckbild, aufgetragen werden. Die verwendeten Lacke sollten thermoplastisch sein, um bei einer später erfolgenden Verformung nicht zu reißen. Druckfarben, wie sie für so genannte "In-Mould-Decoration"-Verfahren kommerziell erhältlich sind, können eingesetzt werden.

Die strahlungshärtbare Beschichtung der Folie kann später die Oberfläche von Gebrauchsgegenständen darstellen. Erfindungsgemäß ist vorgesehen, dass sie ein Polyurethanpolymer umfasst. Dieses Polyurethanpolymer kann auch weitere polymere Einheiten umfassen, beispielsweise Polyharnstoff-Einheiten, Polyester-Einheiten, und dergleichen mehr. Das Polyurethanpolymer weist (Meth)acrylatgruppen auf. Der Begriff (Meth)acrylatgruppen ist im Sinne der vorliegenden Erfindung als Acrylatgruppen und/oder Methacrylatgruppen umfassend zu verstehen. Die (Meth)acrylatgruppen können grundsätzlich an beliebiger Stelle des Polyurethanpolymers oder der weiteren Einheiten an das Polymer angebunden sein. Beispielsweise können sie Teil einer Polyether- oder Polyester(meth)acrylat-Polymereinheit sein.

Das (Meth)acrylatgruppen aufweisende Polyurethan kann als pulverförmiger Feststoff, als Schmelze, aus Lösung oder bevorzugt als wässrige Dispersion vorliegen und eingesetzt werden. Wässrige Dispersionen bieten den Vorteil, auch besonders hochmolekulare Polyurethane in einem Beschichtungsmittel mit niedriger dynamischer Viskosität zu verarbeiten, da bei Dispersionen die Viskosität vom Molekulargewicht der Bestandteile der dispersen Phase unabhängig sind. Geeignete Dispersionen sind beispielsweise (Meth)acrylatgruppen aufweisende Polyurethandispersionen alleine oder in Mischung mit (Meth)acrylatgruppen aufweisenden Polyacrylatdispersionen und/oder (Meth)acrylatgruppen aufweisenden niedermolekularen Verbindungen und/oder dispergierten Polymeren ohne Acrylat- oder Methacrylatgruppen.

Erfindungsgemäß ist vorgesehen, dass das (Meth)acrylatgruppen aufweisende Polyurethanpolymer erhältlich ist aus der Reaktion einer Reaktionsmischung umfassend:
(a) Polyisocyanate und
(b1) (Meth)acrylatgruppen umfassende und gegenüber Isocyanaten reaktive Verbindungen

Geeignete Polyisocyanate (a), worunter auch Diisocyanate zu verstehen sind, sind aromatische, araliphatische, aliphatische oder cycloaliphatische Polyisocyanate. Es können auch Mischungen solcher Di- oder Polyisocyanate eingesetzt werden. Beispiele geeigneter Polyisocyanate sind Butylendiisocyanat, Hexamethylendiisocyanat (HDI), Isophorondiisocyanat (IPDI), 2,2,4 und/oder 2,4,4-Trimethylhexamethylendiisocyanat, die isomeren Bis(4,4'-isocyanatocyclohexyl)methane oder deren Mischungen beliebigen Isomerengehalts, Isocyanatomethyl-1,8-octandiisocyanat, 1,4-Cyclohexylendiisocyanat, 1,4-Phenylendiisocyanat, 2,4- und/oder 2,6-Toluylendiisocyanat, die isomeren Xylendiisocyanate, 1,5-Naphthylendiisocyanat, 2,4'- oder 4,4'-Diphenylmethandiisocyanat, Triphenylmethan-4,4',4"-triisocyanat oder deren Derivate mit Urethan-, Isocyanurat-, Allophanat-, Biuret-, Oxadiazintrion,- Uretdion-, Iminooxadiazindionstruktur und Mischungen derselben. Bevorzugt sind Di- oder Polyisocyanate mit cycloaliphatischer oder aromatischer Struktur, da ein hoher Anteil an diesen Strukturelementen, die Trocknungseigenschaften insbesondere die Blockfestigkeit der Beschichtung vor der UV-Härtung positiv beeinflusst. Besonders bevorzugt Diisocyanate sind Isophorondiisocyanat und die isomeren Bis(4,4'-isocyanatocyclohexyl)methane sowie deren Mischungen.

Die Komponente (b1) umfasst vorzugsweise hydroxyfunktionelle Acrylate oder Methacrylate. Beispiele sind 2-Hydroxyethyl(meth)acrylat, Polyethylenoxid-mono(meth)acrylate, Polypropylenoxidmono(meth)acrylate, Polyalkylenoxidmono(meth)acrylate, Poly(ε-caprolacton)mono(meth)acrylate, wie Pemcure^{®} 12A (Cognis, Düsseldorf, DE), 2-Hydroxypropyl-(meth)acrylat, 4-Hydroxybutyl(meth)acrylat, 3-Hydroxy-2,2-dimethylpropyl(meth)acrylat, die Acrylsäure- und/oder Methacrylsäureteilester mehrwertiger Alkohole wie Trimethylolpropan, Glycerin, Pentaerythrit, Dipentaerythrit, Sorbit, ethoxiliertes, propoxiliertes oder alkoxyliertes Trimethylolpropan, Glycerin, Pentaerythrit, Dipentaerythrit oder deren technische Gemische. Bevorzugt sind die acrylierten Monoalkohole. Geeignet sind auch Alkohole, die sich aus der Umsetzung von doppelbindungshaltigen Säuren mit gegebenenfalls doppelbindungshaltigen, monomeren Epoxidverbindungen erhalten lassen, so zum Beispiel die Umsetzungsprodukte von (Meth)acrylsäure mit Glycidyl(meth)acrylat oder dem Glycidylester der Versaticsäure.

Weiterhin können Isocyanat-reaktive oligomere oder polymere ungesättigte (Meth)acrylatgruppen enthaltende Verbindungen alleine oder in Kombination mit den vorgenannten monomeren Verbindungen eingesetzt werden. Bevorzugt werden als Komponente (b1) hydroxylgruppenhaltige Polyesteracrylate mit einem OH-Gehalt von ≥ 30 mg KOH/g bis ≤ 300 mg KOH/g, bevorzugt ≥ 60 mg KOH/g bis ≤ 200 mg KOH/g, besonders bevorzugt ≥ 70 mg KOH/g bis ≤ 120 mg KOH/g eingesetzt. Bei der Herstellung der hydroxyfunktionellen Polyesteracrylate können insgesamt 7 Gruppen von Monomerbestandteilen zur Anwendung kommen:
1. (Cyclo)Alkandiole wie zweiwertige Alkohole mit (cyclo)aliphatisch gebundenen Hydroxylgruppen des Molekulargewichtsbereichs von ≥ 62 g/mol bis ≤ 286 g/mol, zum Beispiel Ethandiol, 1,2- und 1,3-Propandiol, 1,2-, 1,3- und 1,4-Butandiol, 1,5-Pentandiol, 1,6-Hexandiol, Neopentylglykol, Cyclohexan-1,4-dimethanol, 1,2- und 1,4-Cyclohexandiol, 2-Ethyl-2-butylpropandiol, Ethersauerstoff enthaltende Diole, wie zum Beispiel Diethylenglykol, Triethylenglykol, Tetraethylenglykol, Dipropylenglykol, Tripropylenglykol, Polyethylen-, Polypropylen- oder Polybutylenglykole mit einem Molekulargewicht von ≥ 200 g/mol bis ≤ 4000 g/mol, bevorzugt ≥ 300 g/mol bis ≤ 2000 g/mol, besonders bevorzugt ≥ 450 g/mol bis ≤ 1200 g/mol. Umsetzungsprodukte der zuvor genannten Diole mit ε-Caprolacton oder anderen Lactonen können ebenfalls als Diole zum Einsatz gelangen.
2. Drei- und höherwertige Alkohole des Molekulargewichtsbereichs von ≥ 92 g/mol bis ≤ 254 g/mol, wie zum Beispiel Glycerin, Trimethylolpropan, Pentaerythrit, Dipentaerythrit und Sorbit oder auf diesen Alkoholen gestartete Polyether wie zum Beispiel das Umsetzungsprodukt von 1 mol Trimethylolpropan mit 4 mol Ethylenoxid.
3. Monoalkohole wie zum Beispiel Ethanol, 1- und 2-Propanol, 1- und 2-Butanol, 1-Hexanol, 2-Ethylhexanol, Cyclohexanol und Benzylalkohol.
4. Dicarbonsäuren des Molekulargewichtsbereichs ≥ 104 g/mol bis ≤ 600 g/mol und/oder deren Anhydride, wie zum Beispiel Phthalsäure, Phthalsäureanhydrid, Isophthalsäure, Tetrahydrophthalsäure, Tetra-hydrophthalsäureanhydrid, Hexahydrophthalsäure, Hexahydrophthalsäureanhydrid, Cyclohexandicarbonsäure, Maleinsäureanhydrid, Fumarsäure, Malonsäure, Bernsteinsäure, Bernsteinsäureanhydrid, Glutarsäure, Adipinsäure, Pimelinsäure, Korksäure, Sebacinsäure, Dodecandisäure, hydrierte Dimerfettsäuren.
5. Höherfunktionelle Carbonsäuren oder deren Anhydride wie zum Beispiel Trimellithsäure und Trimellithsäureanhydrid.
6. Monocarbonsäuren, wie zum Beispiel Benzoesäure, Cyclohexancarbonsäure, 2-Ethylhexansäure, Capronsäure, Caprylsäure, Caprinsäure, Laurinsäure, natürliche und synthetische Fettsäuren.
7. Acrylsäure, Methacrylsäure oder dimere Acrylsäure.

Geeignete hydroxylgruppenhaltige Polyesteracrylate umfassen das Umsetzungsprodukt von mindestens einem Bestandteil aus Gruppe 1 oder 2 mit mindestens einem Bestandteil aus Gruppe 4 oder 5 und mindestens einem Bestandteil aus Gruppe 7.

Gegebenenfalls können in diese Polyesteracrylate auch dispergierend wirkende Gruppen eingebaut werden. So können als Alkoholkomponente anteilig Polyethylenglykole und/oder Methoxypolyethylenglykole mitverwendet werden. Als Verbindungen seien beispielsweise auf Alkoholen gestartete Polyethylenglykole, Polypropylenglykole und deren Blockcopolymere sowie die Monomethylether dieser Polyglykole genannt. Besonders geeignet ist Polyethylenglykol-1500- und/oder Polyethylenglykol-500-mono-methylether.

Weiterhin ist es möglich, nach der Veresterung einen Teil von Carboxylgruppen, insbesondere die der (Meth)acrylsäure, mit Mono-, Di- oder Polyepoxiden umzusetzen. Bevorzugt sind beispielsweise die Epoxide (Glycidylether) von monomeren, oligomeren oder polymeren Bisphenol-A, Bisphenol-F, Hexandiol, Butandiol und/oder Trimethylolpropan oder deren ethoxilierten und/oder propoxilierten Derivaten. Diese Reaktion kann insbesondere zur Erhöhung der OH-Zahl des Polyester(meth)acrylats verwendet werden, da bei der Epoxid-Säure-Reaktion jeweils eine OH-Gruppe entsteht. Die Säurezahl des resultierenden Produkts liegt zwischen ≥ 0 mg KOH/g und ≤ 20 mg KOH/g, bevorzugt zwischen ≥ 0,5 mg KOH/g und ≥ 10 mg KOH/g und besonders bevorzugt zwischen ≥ 1 mg KOH/g und ≤ 3 mg KOH/g. Die Reaktion wird bevorzugt durch Katalysatoren wie Triphenylphosphin, Thiodiglykol, Ammonium- und/oder Phosphoniumhalogeniden und/oder Zirkon- oder Zinnverbindungen wie Zinn(II)ethylhexanoat katalysiert.

Ebenfalls bevorzugt als Komponente (b1) sind hydroxylgruppenhaltige Epoxy(meth)acrylate mit OH-Gehalten von ≥ 20 mg KOH/g bis ≤ 300 mg KOH/g, bevorzugt von ≥ 100 mg KOH/g bis ≤ 280 mg KOH/g, besonders bevorzugt von ≥ 150 mg KOH/g bis ≤ 250 mg KOH/g oder hydroxylgruppenhaltige Polyurethan(meth)acrylate mit OH-Gehalten von ≥ 20 mg KOH/g bis ≤ 300 mg KOH/g, bevorzugt von ≥ 40 mg KOH/g bis ≤ 150 mg KOH/g, besonders bevorzugt von ≥ 50 mg KOH/g bis ≤ 100 mg KOH/g sowie deren Mischungen untereinander und Mischungen mit hydroxylgruppenhaltigen ungesättigten Polyestern sowie Mischungen mit Polyester(meth)acrylaten oder Mischungen hydroxylgruppenhaltiger ungesättigter Polyester mit Polyester(meth)acrylaten. Hydroxylguppenhaltige Epoxy(meth)acrylate basieren insbesondere auf Umsetzungsprodukten von Acrylsäure und/oder Methacrylsäure mit Epoxiden (Glycidylverbindungen) von monomeren, oligomeren oder polymeren Bisphenol-A, Bisphenol-F, Hexandiol und/oder Butandiol oder deren ethoxilierten und/oder propoxilierten Derivaten.

Für die in der Beschichtung vorliegenden anorganischen Nanopartikel kommen anorganische Oxide, Mischoxide, Hydroxide, Sulfate, Carbonate, Carbide, Boride und Nitride von Elementen der II bis IV Hauptgruppe und/oder Elemente der I bis VIII Nebengruppe des Periodensystems einschließlich der Lanthanide in Frage. Bevorzugte Partikel sind solche aus Siliziumoxid, Aluminiumoxid, Ceroxid, Zirkonoxid, Nioboxid und Titanoxid, besonders bevorzugt sind hierbei Siliziumoxid-Nanopartikel.

Die eingesetzten Partikel weisen mittlere Teilchengrößen von ≥ 1 nm bis ≤ 200 nm, bevorzugt von ≥ 3 nm bis ≤ 50 nm, besonders bevorzugt von ≥ 5 nm bis ≤ 7 nm auf. Die mittlere Teilchengröße kann vorzugsweise als Z-Mittelwert mittels dynamischer Lichtstreuung in Dispersion bestimmt werden. Unterhalb von 1 nm Partikelgröße erreichen die Nanopartikel die Größe der Polymerpartikel. Solch kleine Nanopartikel können dann zu einem Viskositätsanstieg der Beschichtung führen, welches nachteilig ist. Oberhalb von 200 nm Partikelgröße können die Partikel teilweise mit bloßem Auge wahrgenommen werden, was nicht erwünscht ist.

Bevorzugt weisen ≥ 75 %, besonders bevorzugt ≥ 90 %, ganz besonders bevorzugt ≥ 95 % aller eingesetzten Partikel die vorstehend definierten Größen auf. Mit zunehmendem Grobanteil in der Partikelgesamtheit werden die optischen Eigenschaften der Beschichtung schlechter, insbesondere kann eine Trübung auftreten.

Das Partikel können so ausgewählt werden, dass der Brechungsindex ihres Materials dem Brechungsindex der ausgehärteten strahlungshärtbaren Beschichtung entspricht. Dann weist die Beschichtung transparente optische Eigenschaften auf. Vorteilhaft ist beispielsweise ein Brechungsindex im Bereich von ≥ 1,35 bis ≤ 1,45.

Die nichtflüchtigen Anteile der strahlungshärtbaren Schicht können beispielsweise die nachfolgenden Mengenanteile ausmachen. Die Nanopartikel können in Mengen von ≥ 1 Gewichts-% bis ≤ 60 Gewichts-%, bevorzugt ≥ 5 Gewichts-% bis ≤ 50 Gewichts-% und insbesondere von ≥ 10 Gewichts-% bis ≤ 40 Gewichts-% zugegen sein. Es können weitere Verbindungen wie zum Beispiel monomere Vernetzer in einem Anteil von ≥ 0 Gewichts-% bis ≤ 40 Gewichts-% und insbesondere von ≥ 15 Gewichts-% bis ≤ 20 Gewichts-% vorhanden sein. Das Polyurethanpolymer kann dann die Differenz zu 100 Gewichts-% ausmachen. Generell gilt die Vorgabe, dass die Summe der einzelnen Gewichtsanteile ≤ 100 Gewichts-% beträgt.

Als die vorstehend erwähnten (Meth)acrylatgruppen aufweisenden Polyacrylatdispersionen kommen sogenannte Sekundärdispersionen oder Emulsionspolymerisate, die co-emulgierte (Meth)acrylatgruppen aufweisende niedermolekulare Verbindungen enthalten, in Frage. Sekundärdispersionen werden durch radikalische Polymerisation von vinylischen Monomeren wie zum Beispiel Styrol, Acrylsäure, (Meth)acrylsäureestern und dergleichen in einem im Sinne der Polymerisation inerten Lösungsmittel hergestellt und durch interne und/oder externe Emulgatoren hydrophiliert anschließend in Wasser dispergiert. Ein Einbau von (Meth)acrylatgruppen ist möglich, indem Monomere wie Acrylsäure oder Glycidylmethacrylat bei der Polymerisation verwendet werden und diese vor dem Dispergieren in einer Modifizierungsreaktion mit den im Sinne einer Epoxid-Säure-Reaktion komplementären Verbindungen, die (Meth)acrylatgruppen enthalten wie zum Beispiel Acrylsäure oder Glycidylmethacrylat umgesetzt werden.

Emulsionspolymerisate, die co-emulgierte (Meth)acrylatgruppen aufweisende niedermolekulare Verbindungen enthalten, sind kommerziell erhältlich, beispielsweise Lux® 515, 805, 822 von Alberdingk&Boley, Krefeld, DE oder Craymul® 2716, 2717 von Cray Valley, FR.

Bevorzugt sind Polyacrylatdispersionen mit hoher Glasübergangstemperatur, die die Trocknungseigenschaften der Beschichtung vor der UV-Härtung positiv beeinflussen. Ein hoher Anteil an co-emulgierten (Meth)acrylatgruppen aufweisenden niedermolekularen Verbindungen kann sich negativ auf die Trocknungseigenschaften auswirken.

Als die vorstehend erwähnten dispergierten Polymeren ohne Acrylat- oder Methacrylatgruppen kommen beispielsweise Emulsionspolymerisate in Frage, wie sie kommerziell unter der Bezeichnung Joncryl® (BASF AG, Ludwigshafen, DE), Neocryl (DSM Neoresins, Walwijk, NL) oder Primal (Rohm&Haas Deutschland, Frankfurt, DE) erhältlich sind.

In einer weiteren Ausführungsform der vorliegenden Erfindung liegt das Gewichtsmittel Mw des Polyurethanpolymers in einem Bereich von ≥ 250000 g/mol bis ≤ 350000 g/mol. Das Molekulargewicht kann mittels Gelpermeationschromatographie (GPC) bestimmt werden. Das Gewichtsmittel Mw kann auch in einem Bereich von ≥ 280000 g/mol bis ≤ 320000 g/mol oder von ≥ 300000 g/mol bis ≤ 310000 g/mol liegen. Polyurethandispersionen mit solchen Molekulargewichten der Polymere können ein günstiges Antrocknungsverhalten nach dem Auftragen und weiterhin eine gute Blockfestigkeit nach der Trocknung aufweisen.

Die Glasübergangstemperatur, insbesondere nach "Differential Scanning Calorimetry" (DSC) gemessen, ist häufig wenig geeignet, um die Bestandteile der strahlungshärtbaren Schicht zu charakterisieren. Häufig werden aufgrund der Uneinheitlichkeit der polymeren und oligomeren Bestandteile, dem Vorhandensein einheitlicherer Bausteine wie zum Beispiel von Polyesterdiolen mit mittleren Molgewichten von 2000 und den Verzweigungsgraden der Polymere wenig aussagekräftige Messwerte für die Glasübergangstemperatur erhalten. Insbesondere lässt sich eine Glasübergangstemperatur eines Bindemittels welches aus einem organischen Polyurethanpolymeren und anorganischen Nanopartikeln ("anorganischen Polymeren") besteht kaum sinnvoll definieren. Es gilt jedoch, dass eine Erhöhung an Bestandteilen aromatischer oder cycloaliphatischer Natur im Polyurethan die Antrocknung des Beschichtungsmittels positiv beeinflusst. Natürlich sollte eine Verfilmung des Beschichtungsmittels eventuell auch unter Zusatz von ≥ 3 Gewichts-% bis ≤ 15 Gewichts-% höher als Wasser siedender Lösungsmittel weiterhin gegeben sein.

In einer weiteren Ausführungsform der vorliegenden Erfindung umfasst die Reaktionsmischung weiterhin die folgenden Komponenten:
(b2) hydrophilierend wirkende Verbindungen mit ionischen und/oder in ionische Gruppen überführbare Gruppen und/oder nichtionischen Gruppen
(b3) Polyolverbindungen mit einem mittleren Molekulargewicht von ≥ 50 g/mol bis ≤ 500 g/mol und einer Hydroxylfunktionalität von ≥ 2 und
(b4) aminofunktionelle Verbindungen.

Die Komponente (b2) umfasst ionische Gruppen, die entweder kationischer oder anionischer Natur sein können und/oder nichtionische hydrophile Gruppen. Kationisch, anionisch oder nichtionisch dispergierend wirkende Verbindungen sind solche, die beispielsweise Sulfonium-, Ammonium-, Phosphonium-, Carboxylat-, Sulfonat-, Phosphonat-Gruppen oder die Gruppen, die durch Salzbildung in die vorgenannten Gruppen überführt werden können (potentiell ionische Gruppen) oder Polyethergruppen enthalten und durch vorhandene isocyanatreaktive Gruppen in die Makromoleküle eingebaut werden können. Bevorzugt geeignete isocyanatreaktive Gruppen sind Hydroxyl- und Amingruppen.

Geeignete ionische oder potentiell ionische Verbindungen (b2) sind zum Beispiel Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und ihre Salze wie Dimethylolpropionsäure, Dimethylolbuttersäure, Hydroxypivalinsäure, N-(2-Aminoethyl)-β-alanin, 2-(2-Amino-ethylamino)-ethansulfonsäure, Ethylendiamin-propyl- oder butylsulfonsäure, 1,2- oder 1,3-Propylendiamin-β-ethylsulfonsäure, Äpfelsäure, Zitronensäure, Glykolsäure, Milchsäure, Glycin, Alanin, Taurin, N-Cyclohexylaminopropiosulfonsäure, Lysin, 3,5-Diaminobenzoesäure, Additionsprodukte von IPDI und Acrylsäure und dessen Alkali- und/oder Ammoniumsalze; das Addukt von Natriumbisulfit an Buten-2-diol-1,4, Polyethersulfonat, das propoxylierte Addukt aus 2-Butendiol und NaHSO₃, sowie in kationische Gruppen überführbare Bausteine wie N-Methyl-diethanolamin als hydrophile Aufbaukomponenten. Bevorzugte ionische oder potentielle ionische Verbindungen sind solche, die über Carboxy- oder Carboxylat- und/oder Sulfonatgruppen und/oder Ammoniumgruppen verfügen. Besonders bevorzugte ionische Verbindungen sind solche, die Carboxyl- und/oder Sulfonatgruppen als ionische oder potentiell ionische Gruppen enthalten, wie die Salze von N-(2-Aminoethyl)-β-alanin, der 2-(2-Amino-ethylamino-)ethansulfonsäure oder des Additionsproduktes von IPDI und Acrylsäure (EP-A 0 916 647, Beispiel 1) sowie der Dimethylolpropionsäure.

Geeignete nichtionisch hydrophilierend wirkende Verbindungen sind zum Beispiel Polyoxyalkylenether, die mindestens eine Hydroxy- oder Aminogruppe enthalten. Diese Polyether enthalten einen Anteil von ≥ 30 Gew.-% bis ≤ 100 Gew.-% an Bausteinen, die vom Ethylenoxid abgeleitet sind. In Frage kommen linear aufgebaute Polyether einer Funktionalität zwischen ≥ 1 und ≤ 3, aber auch Verbindungen der allgemeinen Formel (I), 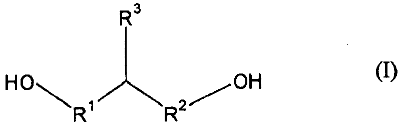 in welcher
- R¹ und R²: unabhängig voneinander jeweils einen zweiwertigen aliphatischen, cycloaliphatischen oder aromatischen Rest mit 1 bis 18 C-Atomen, die durch Sauerstoff und/oder Stickstoffatome unterbrochen sein können, bedeuten und
- R³: für einen alkoxyterminierten Polyethylenoxidrest steht.

Nichtionisch hydrophilierend wirkende Verbindungen sind beispielsweise auch einwertige, im statistischen Mittel ≥ 5 bis ≤ 70, bevorzugt ≥ 7 bis ≤ 55 Ethylenoxideinheiten pro Molekül aufweisende Polyalkylenoxidpolyetheralkohole, wie sie durch Alkoxylierung geeigneter Startermoleküle zugänglich sind.

Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykol-monoalkylether wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole. Besonders bevorzugt wird Diethylenglykolmonobutylether als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen handelt es sich entweder um reine Polyethylenoxidpolyether oder gemischte Polyalkylenoxidpolyether, deren Alkylenoxideinheiten zu ≥ 30 mol-%, bevorzugt zu ≥ 40 mol-% Ethylenoxideinheiten umfassen. Bevorzugte nichtionische Verbindungen sind monofunktionelle gemischte Polyalkylenoxidpolyether, die ≥ 40 mol-% Ethylenoxid- und ≤ 60 mol-% Propylenoxideinheiten aufweisen.

Die Komponente (b2) umfasst bevorzugt ionische Hydrophilierungsmitteln, da nicht ionische Hydrophilierungsmittel sich eher negativ auf die Trocknungseigenschaften und insbesondere die Blockfestigkeit der Beschichtung vor der UV-Härtung auswirken können.

Geeignete niedermolekulare Polyole (b3) sind kurzkettige, vorzugsweise ≥ 2 bis ≤ 20 Kohlenstoffatome enthaltende aliphatische, araliphatische oder cycloaliphatische Diole oder Triole. Beispiele für Diole sind Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, stellungsisomere Diethyloctandiole, 1,3-Butylenglykol, Cyclohexandiol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), 2,2-Dimethyl-3-hydroxypropionsäure-(2,2-dimethyl-3-hydroxypropylester). Bevorzugt sind 1,4-Butandiol, 1,4-Cyclohexandimethanol und 1,6-Hexandiol. Beispiele geeigneter Triole sind Trimethylolethan, Trimethylolpropan oder Glycerin, bevorzugt ist Trimethylolpropan.

Die Komponente (b4) kann ausgewählt sein aus der Gruppe der Polyamine (worunter auch Diamine zu verstehen sind), die zum Erhöhen der Molmasse eingesetzt werden und bevorzugt gegen Ende der Polyadditionsreaktion zugegeben werden. Bevorzugt findet diese Reaktion im wässrigen Medium statt. Dann sollten die Polyamine reaktiver als Wasser gegenüber den Isocyanatgruppen der Komponente (a) sein. Exemplarisch seien genannt Ethylendiamin, 1,3-Propylendiamin, 1,6-Hexamethylendiamin, Isophorondiamin, 1,3-, 1,4-Phenylendiamin, 4,4'-Diphenylmethandiamin, aminofunktionelle Polyethylenoxide oder Polypropylenoxide, die unter dem Namen Jeffamin^{®}, D-Reihe (Fa. Huntsman Corp. Europe, Belgien) erhältlich sind, Diethylentriamin, Triethylentetramin und Hydrazin. Bevorzugt sind Isophorondiamin, Ethylendiamin, 1,6-Hexamethylendiamin. Besonders bevorzugt ist Ethylendiamin.

Anteilig können auch Monoamine, wie zum Beispiel Butylamin, Ethylamin und Amine der Jeffamin^{®} M-Reihe (Huntsman Corp. Europe, Belgien), aminofunktionelle Polyethylenoxide und Polypropylenoxide zugesetzt werden.

In einer weiteren Ausführungsform umfasst die Reaktionsmischung weiterhin die folgende Komponente:
(b5) Polyolverbindungen mit einem mittleren Molekulargewicht von ≥ 500 g/mol bis ≤ 13000 g/mol und einer mittleren Hydroxylfunktionalität von ≥ 1,5 bis ≤ 5.

Geeignete höhermolekulare Polyole (b5) sind Polyole (worunter auch Diole zu verstehen sind) mit einem zahlenmittleren Molekulargewicht im Bereich von ≥ 500 g/mol bis ≤ 13000 g/mol, bevorzugt ≥ 700 g/mol bis ≤ 4000 g/mol. Bevorzugt werden Polymere mit einer mittleren Hydroxylfunktionalität vonv ≥ 1,5 bis ≤ 2,5, bevorzugt von ≥ 1,8 bis ≤ 2,2, besonders bevorzugt von ≥ 1,9 bis ≤ 2,1. Dazu zählen zum Beispiel Polyesteralkohole auf Basis von aliphatischen, cycloaliphatischen und/oder aromatischen Di-, Tri- und/oder Polycarbonsäuren mit Di-, Tri-, und/oder Polyolen sowie Polyesteralkohole auf Lacton-Basis. Bevorzugte Polyesteralkohole sind zum Beispiel Umsetzungsprodukte von Adipinsäure mit Hexandiol, Butandiol oder Neopentylglykol oder Mischungen der genannten Diole des Molekulargewichts von ≥ 500 g/mol bis ≤ 4000 g/mol, besonders bevorzugt ≥ 800 g/mol bis ≤ 2500 g/mol. Ebenfalls geeignet sind Polyetherole, die durch Polymerisation von cyclischen Ethern oder durch Umsetzung von Alkylenoxiden mit einem Startermolekül erhältlich sind. Beispielhaft seien genannt die Polyethylen- und/oder Polypropylenglykole eines mittleren Molekulargewichts von ≥ 500 g/mol bis ≤ 13000 g/mol, weiterhin Polytetrahydrofurane eines mittleren Molekulargewichts von ≥ 500 g/mol bis ≤ 8000 g/mol, bevorzugt von ≥ 800 g/mol bis ≤ 3000 g/mol.

Ebenfalls geeignet sind hydroxyl-terminierte Polycarbonate, die durch Umsetzung von Diolen oder auch Lacton-modifizierten Diolen oder auch Bisphenolen, wie zum Beispiel Bisphenol A, mit Phosgen oder Kohlensäurediestern wie Diphenylcarbonat oder Dimethylcarbonat zugänglich sind. Beispielhaft seine genannt die polymeren Carbonate des 1,6-Hexandiols eines mittleren Molekulargewichts von ≥ 500 g/mol bis ≤ 8000 g/mol, sowie die. Carbonate von Umsetzungsprodukten des 1,6-Hexandiols mit ε-Caprolacton im molaren Verhältnis von ≥ 0,1 bis ≤ 1. Bevorzugt sind vorgenannte Polycarbonatdiole eines mittleren Molekulargewichts von ≥ 800 g/mol bis ≤ 3000 g/mol auf Basis 1,6-Hexandiol und/oder Carbonate von Umsetzungsprodukten des 1,6-Hexandiols mit ε-Caprolacton im molaren Verhältnis von ≥ 0,33 bis ≤ 1. Hydroxyl-terminierte Polyamidalkohole und Hydroxyl-terminierte Polyacrylatdiole sind ebenfalls einsetzbar.

In einer weiteren Ausführungsform weist in der Reaktionsmischung die Anzahl der Hydroxylgruppen in der Komponente (b3) einen Anteil an der Gesamtmenge der Hydroxylgruppen und Aminogruppen von ≥ 5 mol-% bis ≤ 25 mol-% auf, wobei die Hydroxylgruppen von Wasser in der Reaktionsmischung hierbei nicht berücksichtigt werden. Dieser Anteil kann auch in einem Bereich von ≥ 10 mol-% bis ≤ 20 mol-% oder von ≥ 14 mol-% bis ≤ 18 mol-% liegen. Hierunter ist zu verstehen, dass die Anzahl der OH-Gruppen in der Komponente (b3) in der Gesamtheit der OH- und NH₂-Gruppen tragenden Verbindungen, also in der Gesamtheit der Komponenten (b1), (b2), (b3) und (b4) sowie, falls (b5) auch anwesend ist, in der Gesamtheit der Komponenten (b1), (b2), (b3), (b4) und (b5) in den genannten Bereichen liegt. Bei der Berechung wird Wasser nicht berücksichtigt. Durch den Anteil der Komponente (b3) kann der Verzweigungsgrad des Polymers beeinflusst werden, wobei ein höherer Verzweigungsgrad vorteilhaft ist. Hierdurch kann das Antrocknungsverhalten der Beschichtung verbessert werden.

Im Übrigen wird die Antrocknung durch möglichst viele und starke Wasserstoffgruppenbindungen zwischen den Molekülen der Beschichtung verbessert. Urethan, Harnstoff, Ester insbesondere Carbonatester sind Beispiele für Struktureinheiten, die die Antrocknung unterstützen, in je größerer Zahl sie eingebaut werden.

In einer weiteren Ausführungsform umfasst die Beschichtung weiterhin die folgende Komponente:
(b6) (Meth)acrylatgruppen umfassende und gegenüber Isocyanaten nicht reaktive und/oder nicht zur Reaktion gebrachte Verbindungen.

Diese Verbindungen dienen zur Erhöhung der Doppelbindungsdichte der Beschichtung. Eine hohe Doppelbindungsdichte erhöht die Gebrauchseigenschaften (Beständigkeit gegen mechanische oder chemische Einflüsse) der UV-gehärteten Beschichtung. Sie haben allerdings einen Einfluss auf die Trocknungseigenschaften. Daher ist werden von ihnen bevorzugt ≥ 1 Gewichts-% bis ≤ 35 Gewichts-%, insbesondere ≥ 5 Gewichts-% bis ≤ 25 Gewichts-% und ganz besonders bevorzugt ≥ 10 Gewichts-% bis ≤ 20 Gewichts-% des Gesamtfestkörpers des Beschichtungsmittels eingesetzt. Diese Verbindungen werden in der Technik UV-härtender Beschichtungsmittel auch als Reaktivverdünner bezeichnet.

In einer weiteren Ausführungsform ist die Oberfläche der Nanopartikel in der Beschichtung durch die kovalente und/oder nicht kovalente Anbindung von weiteren Verbindungen modifiziert.

Eine bevorzugte kovalente Oberflächenmodifizierung ist die Silanisierung mit Alkoxysilanen und/oder Chlorsilanen. Besonders bevorzugt ist die partielle Modifizierung mit γ-Glycidoxypropyltrimethoxysilan.

Ein Beispiel für den nicht kovalenten Fall ist eine adsorptiv/assoziative Modifikation durch Tenside oder Blockcopolymere.

Weiterhin ist es möglich, dass die Verbindungen, welche an die Oberfläche der Nanopartikel kovalent und/oder nicht kovalent gebunden sind, auch Kohlenstoff-Kohlenstoff-Doppelbindungen enthalten. Bevorzugt sind hierbei (Meth)acrylatgruppen. Auf diese Weise können die Nanopartikel bei der Strahlenhärtung noch fester in die Bindemittelmatrix eingebunden werden.

Dem Beschichtungsmittel, welches zur strahlungshärtbaren Schicht getrocknet wird, können weiterhin so genannte Vernetzter zugesetzt werden, die die Antrocknung und gegebenenfalls die Haftung der strahlungshärtbaren Schicht verbessern sollen. Es kommen bevorzugt Polyisocyanate, Polyaziridine sowie Polycarbodiimide in Frage. Besonders bevorzugt sind hydrophilierte Polyisocyanate für wässrige Beschichtungsmittel. Die Menge und die Funktionalität der Vernetzer ist insbesondere im Hinblick auf die gewünschte Verformbarkeit der Folie abzustimmen. Im allgemeinen werden ≤ 10 Gewichts-% an festem Vernetzer auf den Festgehalt des Beschichtungsmittels zugesetzt. Viele der möglichen Vernetzer reduzieren die Lagerfähigkeit des Beschichtungsmittels, da sie bereits im Beschichtungsmittel langsam reagieren. Der Zusatz der Vernetzer sollte daher entsprechend kurz vor der Applikation erfolgen. Hydrophilierte Polyisocyanate sind erhältlich beispielsweise unter der Bezeichnung Bayhydur® (Bayer MaterialScience AG, Leverkusen, DE) und Rhodocoat® (Rhodia, F). Bei Zusatz eines Vernetzers kann sich die notwendige Zeit sowie die notwendige Temperatur, bis optimale Antrocknung erreicht ist, erhöhen.

Weiterhin können in der strahlungshärtbaren Schicht bzw. in dem Beschichtungsmittel, mit deren Hilfe die Schicht erzeugt wird, die in der Technologie der Lacke, Farben, Druckfarben üblichen Zusätze und/oder Hilfs- und/oder Lösemittel enthalten sein. Beispiele hierfür werden nachfolgend beschrieben.

Zugesetzte Fotoinitiatoren sind durch aktinische Strahlung aktivierbare Initiatoren, die eine radikalische Polymerisation der entsprechenden polymerisierbaren Gruppen auslösen. Fotoinitiatoren sind an sich bekannte, kommerziell vertriebene Verbindungen, wobei zwischen unimolekularen (Typ I) und bimolekularen (Typ II) Initiatoren unterschieden wird. (Typ I)-Systeme sind zum Beispiel aromatische Ketonverbindungen, zum Beispiel Benzophenone in Kombination mit tertiären Aminen, Alkylbenzophenone, 4,4'-Bis(dimethylamino)benzophenon (Michlers Keton), Anthron und halogenierte Benzophenone oder Mischungen der genannten Typen. Weiter geeignet sind (Typ II)-Initiatoren wie Benzoin und seine Derivate, Benzilketale, Acylphosphinoxide zum Beispiel 2,4,6-Trimethyl-benzoyl-diphenylphosphinoxid, Bisacylphosphinoxide, Phenylglyoxylsäureester, Campherchinon, α-Aminoalkylphenone, α,α-Dialkoxyacetophenone und α-Hydroxyalkylphenone. Es kann vorteilhaft sein auch Gemische dieser Verbindungen einzusetzen. Geeignete Initiatoren sind kommerziell erhältlich beispielsweise unter der Bezeichnung Irgacure® und Darocur® (Ciba, Basel, CH) sowie Esacure® (Fratelli Lamberti, Adelate, IT).

Insbesondere sind dies Stabilisatoren, Lichtschutzmittel wie UV-Absorber und sterisch gehinderte Amine (HALS), weiterhin Antioxidantien sowie Lackhilfsmittel, zum Beispiel Antiabsetzmittel, Entschäumungs- und/oder Netzmittel, Verlaufmittel, Weichmacher, Antistatika, Katalysatoren, Hilfslösemittel und/oder Verdicker sowie Pigmente, Farbstoffe und/oder Mattierungsmittel. Geeignete Lösungsmittel sind abgestimmt auf die verwendeten Bindemittel sowie das Applikationsverfahren Wasser und/oder andere gängige Lösungsmittel aus der Beschichtungstechnik. Beispiele sind Aceton, Ethylacetat, Butylacetat, Methoxyproylacetat, Diacetonalkohol, Glykole, Glykolether, Wasser, Xylol oder Solventnaphtha der Fa. Exxon-Chemie als aromatenhaltiges Lösemittel sowie Gemische der genannten Lösemittel.

Weiterhin können Füllstoffe und nichtfunktionelle Polymere zur Einstellung der mechanischen, haptischen, elektrischen und/oder optischen Eigenschaften enthalten sein. Hierzu eignen sich alle Polymere und Füllstoffe, die mit dem Beschichtungsmittel verträglich und mischbar sind.

Als Polymere Zusatzstoffe kommen Polymere wie beispielsweise Polycarbonate, Polyolefine, Polyether, Polyester, Polyamide und Polyharnstoffe in Frage.

Als Füllstoffe können mineralische Füllstoffe, insbesondere sogenannte Mattierungsmittel, Glasfasern, Ruße, Kohlenstoffnanoröhren (zum Beispiel Baytubes®, Bayer MaterialScience AG, Leverkusen) und/oder metallische Füllstoffe, wie sie für sog. Metalliclackierungen zum Einsatz kommen, verwendet werden.

Gegenstand der Erfindung ist weiterhin ein Verfahren zur Herstellung von beschichteten Folien gemäß der vorliegenden Erfindung, umfassend die Schritte:
- Bereitstellen einer Polymerdispersion, wobei die Dispersion ein Polyurethanpolymer umfasst, welches (Meth)acrylatgruppen aufweist und welches erhältlich ist aus der Reaktion einer Reaktionsmischung umfassend:
   (a) Polyisocyanate und
   (b1) (Meth)acrylatgruppen umfassende und gegenüber Isocyanaten reaktive Verbindungen
   wobei das Gewichtsmittel Mw des Polyurethanpolymers bestimmt mittels Gelpermeationschromatographie in einem Bereich von ≥ 250000 g/mol bis ≤ 350000 g/mol liegt und wobei die Dispersion weiterhin anorganische Nanopartikel ausgewählt aus der Gruppe der Oxide Siliziumoxid, Aluminiumoxid, Ceroxid, Zirkonoxid, Nioboxid und Titanoxid mit einer mittleren Teilchengröße bestimmt mittels dynamischer Lichtstreuung mit einem High Performance Particle Sizer (HPPS) von ≥ 1 nm bis ≤ 200 nm umfasst
- Beschichten einer Folie enthaltend wenigstens ein thermoplastisches Polymer ausgewählt aus thermoplastischem Polyurethan, Polymethylmethacrylat (PMMA) sowie modifizierte Varianten von PMMA, Polycarbonat (PC), Acrylnitril-Styrol-Acrylester-Copolymerisaten (ASA) und Acrylnitril-Butadien-Styrol-Copolymerisaten (ABS) mit der Polymerdispersion
- Trocknen der Polymerdispersion.

Das Bereitstellen der Polymerdispersion verläuft über die polymerbildende Reaktion und das Dispergieren des Polyurethanpolymers in Wasser.

Die Reaktionsmischung kann weiterhin die vorstehend erwähnten weiteren Komponenten umfassen, neben Photoinitiatoren, Additiven und Co-Solventien also insbesondere (b2), (b3), (b4), (b5) und (b6). Diese Komponenten können in einer erfindungsgemäßen Reaktionsmischung beispielhaft in den folgenden Mengenanteilen vorhanden sein, wobei die Summe der einzelnen Gewichtsanteile ≤ 100 Gewichts-% beträgt:
(a): ≥ 5 Gewichts-% bis ≤ 50 Gewichts-%, vorzugsweise ≥ 20 Gewichts-% bis ≤ 40 Gewichts-%, mehr bevorzugt ≥ 25 Gewichts-% bis ≤ 35 Gewichts-%.
(b1): ≥ 10 Gewichts-% bis ≤ 80 Gewichts-%, vorzugsweise ≥ 30 Gewichts-% bis ≤ 60 Gewichts-%, mehr bevorzugt ≥ 40 Gewichts-% bis ≤ 50 Gewichts-%.
(b2): ≥ 0 Gewichts-% bis ≤ 20 Gewichts-%, vorzugsweise ≥ 2 Gewichts-% bis ≤ 15 Gewichts-%, mehr bevorzugt ≥ 3 Gewichts-% bis ≤ 10 Gewichts-%.
(b3): ≥ 0 Gewichts-% bis ≤ 25 Gewichts-%, vorzugsweise ≥ 0,5 Gewichts-% bis ≤ 15 Gewichts-%, mehr bevorzugt ≥ 1 Gewichts-% bis ≤ 5 Gewichts-%.
(b4): ≥ 0 Gewichts-% bis ≤ 20 Gewichts-%, vorzugsweise ≥ 0,5 Gewichts-% bis ≤ 10 Gewichts-%, mehr bevorzugt ≥ 1 Gewichts-% bis ≤ 5 Gewichts-%.
(b5): ≥ 0 Gewichts-% bis ≤ 50 Gewichts-%, vorzugsweise = 0 Gewichts-%.
(b6): ≥ 0 Gewichts-% bis ≤ 40 Gewichts-%, vorzugsweise ≥ 5 Gewichts-% bis ≤ 30 Gewichts-%, mehr bevorzugt ≥ 10 Gewichts-% bis ≤ 25 Gewichts-%.

Die Reaktionsprodukte aus der Reaktionsmischung werden zur Herstellung einer wässrigen Dispersion in Wasser aufgenommen. Der Anteil des Polyurethan-Polymers im Wasser kann in einem Bereich von ≥ 10 Gewichts-% bis ≤ 75 Gewichts-%, vorzugsweise ≥ 15 Gewichts-% bis ≤ 55 Gewichts-%, mehr bevorzugt ≥ 25 Gewichts-% bis ≤ 40 Gewichts-% liegen.

Der Anteil der Nanopartikel in der wässrigen Dispersion kann in einem Bereich von ≥5 Gewichts-% bis ≤ 60 Gewichts-%, vorzugsweise ≥ 10 Gewichts-% bis ≤ 40 Gewichts-%, mehr bevorzugt ≥ 15 Gewichts-% bis ≤ 30 Gewichts-% liegen.

Die Herstellung einer Polyurethandispersion als Beispiel für eine erfindungsgemäße Beschichtung einer Folie kann in einer oder mehreren Stufen in homogener, oder bei mehrstufiger Umsetzung, teilweise in disperser Phase durchgeführt werden. Nach vollständig oder teilweise durchgeführter Polyaddition erfolgt ein Dispergierschritt. Im Anschluss erfolgt gegebenenfalls eine weitere Polyaddition oder eine Modifikation in disperser Phase.

Zur Herstellung der Polyurethandispersion können Verfahren wie beispielsweise Emulgator-Scherkraft-, Aceton-, Präpolymer-Misch-, Schmelz-Emulgier-, Ketimin- und Feststoff-Spontan-Dispergier-Verfahren oder Abkömmlinge davon verwendet werden. Bevorzugt ist das Schmelz-Emulgier- und das Aceton-Verfahren sowie Mischvarianten dieser beiden Verfahren.

Üblicherweise werden die Bestandteile (b1), (b2), (b3) und (b5), die keine primären oder sekundären Aminogruppen aufweisen, und ein Polyisocyanat (a) zur Herstellung eines Polyurethan-Präpolymers im Reaktor ganz oder teilweise vorgelegt und gegebenenfalls mit einem mit Wasser mischbaren aber gegenüber Isocyanatgruppen inerten Lösungsmittel verdünnt, bevorzugt aber ohne Lösungsmittel, auf höhere Temperaturen, bevorzugt im Bereich von ≥ 50 °C bis ≤ 120 °C, aufgeheizt.

Geeignete Lösungsmittel sind zum Beispiel Aceton, Butanon, Tetrahydrofuran, Dioxan, Acetonitril, Dipropylenglykoldimethylether und 1-Ethyl- oder 1-Methyl-2-pyrrolidon, die nicht nur zu Beginn der Herstellung, sondern gegebenenfalls in Teilen auch später zugegeben werden können. Bevorzugt sind Aceton und Butanon. Üblicherweise wird zu Beginn der Reaktion nur Lösemittel für ≥ 60 Gewichts-% bis ≤ 97 Gewichts-%, bevorzugt ≥ 70 Gewichts-% bis ≤ 85 Gewichts-% Festgehalt zugegeben. Je nach Verfahrensvariante, insbesondere wenn vollständige Umsetzung vor dem Dispergieren stattfinden soll, kann mit Fortschreiten der Reaktion die Zugabe weiteren Lösemittels zweckmäßig sein.

Es ist möglich, die Reaktion unter Normaldruck oder erhöhtem Druck, zum Beispiel oberhalb der Normaldruck-Siedetemperatur eines Lösungsmittels wie zum Beispiel Aceton, durchzuführen.

Weiterhin können zur Beschleunigung der Isocyanatadditionsreaktion Katalysatoren wie zum Beispiel Triethylamin, 1,4-Diazabicyclo-[2,2,2]-octan, Zinndioktoat, Wismuthoktoat oder Dibutylzinndilaurat mit vorgelegt oder später zudosiert werden. Bevorzugt ist Dibutylzinndilaurat (DBTL). Neben Katalysatoren kann auch die Zugabe von Stabilisatoren, die die (Meth)acrylatgruppen vor spontaner, ungewollter Polymerisation schützen, zweckmäßig sein. Zumeist enthalten die eingesetzten Verbindungen mit (Meth)acrylatgruppen solche Stabilisatoren bereits.

Anschließend werden die gegebenenfalls zu Beginn der Reaktion noch nicht zugegebenen Bestandteile (a) und/oder (b1), (b2), (b3) und (b5), die keine primären oder sekundären Aminogruppen aufweisen, zudosiert. Bei der Herstellung des Polyurethan-Präpolymeren beträgt das Stoffmengenverhältnis von Isocyanatgruppen zu mit Isocyanat reaktiven Gruppen ≥ 0,90 bis ≤ 3, bevorzugt ≥ 0,95 bis ≤ 2, besonders bevorzugt ≥ 1,05 bis ≤ 1,5. Die Umsetzung der Komponenten (a) mit (b) erfolgt bezogen auf die Gesamtmenge an mit Isocyanaten reaktiven Gruppen des Teils von (b), der keine primären oder sekundären Aminogruppen aufweist, teilweise oder vollständig, bevorzugt aber vollständig. Der Umsetzungsgrad wird üblicherweise durch Verfolgung des NCO-Gehalts der Reaktionsmischung überwacht. Dazu können sowohl spektroskopische Messungen, zum Beispiel Infrarot- oder Nahinfrarot-Spektren, Bestimmungen des Brechungsindex als auch chemische Analysen, wie Titrationen, von entnommenen Proben vorgenommen werden. Es werden Polyurethan-Präpolymere, die freie Isocyanatgruppen enthalten können, in Substanz oder in Lösung erhalten.

Nach oder während der Herstellung der Polyurethan-Präpolymere aus (a) und (b) erfolgt, falls dies noch nicht in den Ausgangsmolekülen durchgeführt wurde, die teilweise oder vollständige Salzbildung der anionisch und/oder kationisch dispergierend wirkenden Gruppen. Im Falle anionischer Gruppen werden dazu Basen wie Ammoniak, Ammoniumcarbonat oder -hydrogencarbonat, Trimethylamin, Triethylamin, Tributylamin, Diisopropylethylamin, Dimethylethanolamin, Diethylethanolamin, Triethanolamin, Ethylmorpholin, Kaliumhydroxid oder Natriumcarbonat eingesetzt, bevorzugt Triethylamin, Triethanolamin, Dimethylethanolamin oder Diisopropylethylamin. Die Stoffmenge der Basen liegt zwischen ≥ 50% und ≤ 100%, bevorzugt zwischen ≥ 60% und ≤ 90% der Stoffmenge der anionischen Gruppen. Im Falle kationischer Gruppen werden zum Beispiel Schwefelsäuredimethylester, Milchsäure oder Bernsteinsäure eingesetzt. Werden nur nichtionisch hydrophilierte Verbindungen (b2) mit Ethergruppen verwendet, entfällt der Neutralisationsschritt. Die Neutralisation kann auch gleichzeitig mit der Dispergierung erfolgen, in dem das Dispergierwasser bereits das Neutralisationsmittel enthält.

Die gegebenenfalls noch verbliebenen Isocyanatgruppen werden durch Reaktion mit aminischen Komponenten (b4) und/oder falls vorhanden aminischen Komponenten (b2) und/oder Wasser umgesetzt. Diese Kettenverlängerung kann dabei entweder in Lösungsmittel vor dem Dispergieren oder in Wasser nach dem Dispergieren durchgeführt werden. Sind aminische Komponenten in (b2) enthalten, erfolgt die Kettenverlängerung bevorzugt vor der Dispergierung.

Die aminische Komponente (b4) und/oder falls vorhanden die aminische Komponente (b2) kann mit organischen Lösungsmitteln und/oder mit Wasser verdünnt dem Reaktionsgemisch zugegeben werden. Bevorzugt werden ≥ 70 Gewichts-% bis ≤ 95 Gewichts-% Lösungsmittel und/oder Wasser eingesetzt. Sind mehrere aminische Komponenten (b2) und/oder (b4) vorhanden, so kann die Umsetzung nacheinander in beliebiger Reihenfolge oder gleichzeitig durch Zugabe einer Mischung erfolgen.

Während oder im Anschluss an die Herstellung des Polyurethans werden die gegebenenfalls oberflächenmodifizierten Nanopartikel eingebracht. Dies kann durch einfaches Einrühren der Partikel erfolgen. Denkbar ist jedoch auch der Einsatz erhöhter Dispergierenergie, wie beispielsweise durch Ultraschall, Strahldispergierung oder Hochgeschwindigkeitsrüher nach dem Rotor-Stator-Prinzip erfolgen kann. Bevorzugt ist einfaches mechanisches Einrühren.

Die Partikel können prinzipiell sowohl in Pulverform als auch in Form von kolloiden Suspensionen oder Dispersionen in geeigneten Lösungsmitteln eingesetzt werden. Die anorganischen Nanopartikel werden bevorzugt in kolloid disperser Form in organischen Lösungsmitteln (Organosole) oder besonders bevorzugt in Wasser eingesetzt.

Für die Organosole geeignete Lösemittel sind Methanol, Ethanol, i-Propanol, Aceton, 2-Butanon, Methyl-isobutylketon, Butylacetat, Ethylacetat, 1-Methoxy-2-propylacetat, Toluol, Xylol, 1,4-Dioxan, Diacetonalkohol, Ethylenglykol-n-propylether oder beliebige Gemische solcher Lösungsmittel. Geeignete Organosole weisen einen Feststoffgehalt von ≥ 10 Gewichts-% bis ≤ 60 Gewichts-%, bevorzugt ≥ 15 Gewichts-% bis ≤ 50 Gewichts-% auf. Geeignete Organosole sind beispielsweise Siliziumdioxid-Organosole, wie sie zum Beispiel unter den Handelsnamen Organosilicasol® und Suncolloid® (Nissan Chem. Am. Corp.) oder unter der Bezeichnung Highlink®NanO G (Clariant GmbH) erhältlich sind.

Soweit die Nanopartikel in organischen Lösemitteln (Organosole) zum Einsatz kommen, werden diese mit den Polyurethanen, während deren Herstellung vor deren Dispergierung mit Wasser vermischt. Die resultierenden Mischungen werden anschließend durch Zusatz von Wasser oder durch Überführung in Wasser dispergiert. Das organische Lösemittel des Organosols kann nach Bedarf vor oder nach der Dispergierung mit Wasser, vorzugsweise im Anschluss an die Dispergierung, mit Wasser destillativ entfernt werden.

Im Sinne der vorliegenden Erfindung werden weiterhin bevorzugt anorganische Partikel in Form ihrer wässrigen Zubereitungen verwendet. Besonders bevorzugt ist der Einsatz anorganischer Partikel in Form wässriger Zubereitungen oberflächenmodifizierter, anorganischer Nanopartikel. Diese können beispielsweise vor oder gleichzeitig mit der Einarbeitung in das silanmodifizierte, polymere organische Bindemittel oder eine wässrige Dispersion des silanmodifizierten, polymeren organischen Bindemittels durch Silanisierung modifiziert werden.

Bevorzugte wässrige, kommerzielle Nanopartikel-Dispersionen sind unter der Bezeichnung Levasil® (H.C. Starck GmbH, Goslar, Deutschland) und Bindzil® (EKA Chemical AB, Bohus, Sweden) erhältlich. Besonders bevorzugt werden wässrige Dispersionen von Bindzil® CC 15, Bindzil® CC 30 und Bindzil® CC 40 der Fa. EKA (EKA Chemical AB, Bohus, Sweden) eingesetzt.

Soweit die Nanopartikel in wässriger Form zum Einsatz kommen, werden diese den wässrigen Dispersionen der Polyurethane zugesetzt. In einer weiteren Ausführungsform wird bei der Herstellung der Polyurethandispersionen anstelle von Wasser die bevorzugt weiter mit Wasser verdünnten wässrigen Nanopartikel-Dispersion verwendet.

Zwecks Herstellung der Polyurethan-Dispersion werden die Polyurethan-Präpolymere, gegebenenfalls unter starker Scherung, wie zum Beispiel starkem Rühren, entweder in das Dispergierwasser eingetragen oder man rührt umgekehrt das Dispergierwasser zu den Präpolymeren. Anschließend kann dann, falls noch nicht in der homogenen Phase geschehen, die Molmassenerhöhung durch Reaktion von gegebenenfalls vorhandenen Isocyanatgruppen mit der Komponente (b4) erfolgen. Die eingesetzte Menge an Polyamin (b4) hängt von den noch vorhandenen, nicht umgesetzten Isocyanatgruppen ab. Bevorzugt werden ≥ 50% bis ≤ 100%, besonders bevorzugt ≥ 75% bis ≤ 95% der Stoffmenge der Isocyanatgruppen mit Polyaminen (b4) umgesetzt.

Die entstehenden Polyurethan-Polyharnstoff-Polymere weisen einen Isocyanatgehalt von ≥ 0 Gewichts-% bis ≤ 2 Gewichts-%, bevorzugt von ≥ 0 Gewichts-% bis ≤ 0,5 Gewichts-%, insbesondere 0 Gewichts-% auf.

Gegebenenfalls kann das organische Lösungsmittel abdestilliert werden. Die Dispersionen können dann einen Festkörpergehalt von ≥ 20 Gewichts-% bis ≤ 70 Gewichts-%, bevorzugt > 30 Gewichts-% bis ≤ 55 Gewichts-%, insbesondere ≥ 35 Gewichts-% bis ≤ 45 Gewichts-% aufweisen.

Das Beschichten einer Folie mit der Polymerdispersion erfolgt vorzugsweise mittels Walzen, Rakeln, Fluten, Spritzen oder Gießen. Ebenfalls möglich sind Druckverfahren, Tauchen, Transferverfahren und Streichen. Die Applikation sollte unter Ausschluss von Strahlung erfolgen, die zu einer vorzeitigen Polymerisation der Acrylat- und/oder Methacrylatdoppelbindungen des Polyurethans führen kann.

Das Trocknen der Polymerdispersion schließt sich an die Applikation des Beschichtungsmittels auf die Folie an. Hierzu wird insbesondere mit erhöhten Temperaturen in Öfen und mit bewegter und gegebenenfalls auch entfeuchteter Luft (Konvektionsöfen, Düsentrockner) sowie Wärmestrahlung (IR, NIR) gearbeitet. Weiterhin können Mikrowellen zum Einsatz kommen. Es ist möglich und vorteilhaft, mehrere dieser Trocknungsverfahren zu kombinieren.

Vorteilhafterweise werden die Bedingungen für die Trocknung so gewählt, dass durch die erhöhte Temperatur und/oder die Wärmestrahlung keine Polymerisation (Vernetzung) der Acrylat- oder Methacrylatgruppen ausgelöst wird, da dieses die Verformbarkeit beeinträchtigen kann. Weiterhin ist die maximal erreichte Temperatur zweckmäßigerweise so niedrig zu wählen, dass sich die Folie nicht unkontrolliert verformt.

Nach dem Trocknungs-/Härtungsschritt kann die beschichtete Folie, gegebenenfalls nach Kaschierung mit einer Schutzfolie auf der Beschichtung, aufgerollt werden. Das Aufrollen kann geschehen, ohne dass es zum Verkleben der Beschichtung mit der Rückseite der Substratfolie oder der Kaschierfolie kommt. Es ist aber auch möglich, die beschichtete Folie zuzuschneiden und die Zuschnitte einzeln oder als Stapel der Weiterverarbeitung zuzuführen.

Die vorliegende Erfindung betrifft weiterhin die Verwendung von beschichteten Folien gemäß der Erfindung zur Herstellung von Formkörpern. Die erfindungsgemäß hergestellten Folien sind wertvolle Materialien zur Herstellung von Gebrauchsgegenständen. So kann die Folie Verwendung finden in der Herstellung von Fahrzeuganbauteilen, Kunststoffteilen wie Blenden für den Fahrzeug(innen)bau und/oder Flugzeug(innen)bau, Möbelbau, elektronischen Geräten, Kommunikationsgeräten, Gehäusen und dekorativen Gegenständen.

Die vorliegende Erfindung betrifft ebenfalls ein Verfahren zur Herstellung von Formkörpern mit einer strahlungsgehärteten Beschichtung, umfassend die Schritte:
- Bereitstellen einer beschichteten Folie gemäß der vorliegenden Erfmdung
- Formen des Formkörpers
- Härten der strahlungshärtbaren Beschichtung.

Die beschichtete Folie wird hierbei durch thermisches Verformen in die gewünschte Endform gebracht werden. Dies kann mittels Verfahren wie Tiefziehen, Vakuum-Tiefziehen, Pressen oder Blasverformen erfolgen.

Nach dem Verformungsschritt wird die Beschichtung der Folie durch Bestrahlung mit aktinischer Strahlung endgehärtet.

Unter Härtung mit aktinischer Strahlung versteht man die radikalische Polymerisation von ethylenisch ungesättigten Kohlenstoff-Kohlenstoff-Doppelbindungen mittels Initiatorradikalen, die durch Bestrahlung mit aktinischer Strahlung beispielsweise aus den vorstehend beschriebenen Fotoinitiatoren freigesetzt werden.

Die Strahlungshärtung erfolgt bevorzugt durch Einwirkung energiereicher Strahlung, also UV-Strahlung oder Tageslicht, zum Beispiel Licht der Wellenlänge von ≥ 200 nm bis ≤ 750 nm, oder durch Bestrahlen mit energiereichen Elektronen (Elektronenstrahlung, zum Beispiel von ≥ 90 keV bis ≤ 300 keV). Als Strahlungsquellen für Licht oder UV-Licht dienen beispielsweise Mittel- oder Hochdruckquecksilberdampflampen, wobei der Quecksilberdampf durch Dotierung mit anderen Elementen wie Gallium oder Eisen modifiziert sein kann. Laser, gepulste Lampen (unter der Bezeichnung UV-Blitzlichtstrahler bekannt), Halogenlampen oder Eximerstrahler sind ebenfalls einsetzbar. Die Strahler können ortsunbeweglich installiert sein, so dass das zu bestrahlende Gut mittels einer mechanischen Vorrichtung an der Strahlungsquelle vorbeibewegt wird, oder die Strahler können beweglich sein, und das zu bestrahlende Gut verändert bei der Härtung seinen Ort nicht. Die üblicherweise zur Vernetzung ausreichende Strahlungsdosis bei UV-Härtung liegt im Bereich von ≥ 80 mJ/cm² bis ≤ 5000 mJ/cm².

Die Bestrahlung kann gegebenenfalls auch unter Ausschluss von Sauerstoff, zum Beispiel unter Inertgas-Atmosphäre oder Sauerstoff-reduzierter Atmosphäre durchgeführt werden. Als Inertgase eignen sich bevorzugt Stickstoff, Kohlendioxid, Edelgase oder Verbrennungsgase. Des weiteren kann die Bestrahlung erfolgen, indem die Beschichtung mit für die Strahlung transparenten Medien abgedeckt wird. Beispiele hierfür sind zum Beispiel Kunststofffolien, Glas oder Flüssigkeiten wie Wasser.

Je nach Strahlungsdosis und Aushärtungsbedingungen sind Typ und Konzentration des gegebenenfalls verwendeten Initiators in dem Fachmann bekannter Weise oder durch orientierende Vorversuche zu variieren bzw. zu optimieren. Zur Härtung der verformten Folien ist es besonders vorteilhaft, die Härtung mit mehreren Strahlern durchzuführen, deren Anordnung so zu wählen ist, dass jeder Punkt der Beschichtung möglichst die zur Aushärtung optimale Dosis und Intensität an Strahlung erhält. Insbesondere sind nicht bestrahlte Bereiche (Schattenzonen) zu vermeiden.

Weiterhin kann es je nach eingesetzter Folie vorteilhaft sein, die Bestrahlungsbedingungen so zu wählen, dass die thermische Belastung der Folie nicht zu groß wird. Insbesondere dünne Folien sowie Folien aus Materialien mit niedriger Glasübergangstemperatur können zur unkontrollierten Verformung neigen, wenn durch die Bestrahlung eine bestimmte Temperatur überschritten wird. In diesen Fällen ist es vorteilhaft, durch geeignete Filter oder Bauart der Strahler möglicht wenig Infrarotstrahlung auf das Substrat einwirken zu lassen. Weiterhin kann durch Reduktion der entsprechenden Strahlendosis der unkontrollierten Verformung entgegengewirkt werden. Dabei ist jedoch zu beachten, dass für eine möglichst vollständige Polymerisation eine bestimmte Dosis und Intensität der Bestrahlung notwendig sind. Es ist in diesen Fällen besonders vorteilhaft, unter inerten oder sauerstoffreduzierten Bedingungen zu härten, da bei Reduktion des Sauerstoffanteils in der Atmosphäre oberhalb der Beschichtung die erforderliche Dosis zur Aushärtung abnimmt.

Besonders bevorzugt werden zur Härtung Quecksilberstrahler in ortsfesten Anlagen eingesetzt. Fotoinitiatoren werden dann in Konzentrationen von ≥ 0,1 Gewichts-% bis ≤ 10 Gewichts-%, besonders bevorzugt von ≥ 0,2 Gewichts-% bis ≤ 3,0 Gewichts-% bezogen auf den Festkörper der Beschichtung eingesetzt. Zur Härtung dieser Beschichtungen wird bevorzugt eine Dosis von ≥ 80 mJ/cm² bis ≤ 5000 mJ/cm² eingesetzt.

Die resultierende gehärtete, beschichtete, verformte Folie zeigt sehr gute Beständigkeiten gegenüber Lösungsmittel, färbenden Flüssigkeiten wie sie im Haushalt vorkommen sowie hohe Härte, gute Kratz- und Abriebbeständigkeiten bei hoher optischer Transparenz.

In einer Ausführungsform erfolgt das Formen des Formkörpers in einem Werkzeug bei einem Druck von ≥ 20 bar bis ≤ 150 bar. Vorzugsweise liegt der Druck bei diesem Hochdruckverformverfahren in einem Bereich von ≥ 50 bar bis ≤ 120 bar oder in einem Bereich von ≥ 90 bar bis ≤ 110 bar. Der anzuwendende Druck wird insbesondere von der Dicke der zu verformenden Folie und der Temperatur sowie dem verwendeten Folienmaterial bestimmt.

In einer weiteren Ausführungsform findet das Formen des Formkörpers bei einer Temperatur von ≥ 20 °C bis ≤ 60 °C unterhalb der Erweichungstemperatur des Materials der Folie statt. Vorzugsweise liegt diese Temperatur um ≥ 30 °C bis ≤ 50 °C oder um ≥ 40 °C bis ≤ 45 °C unterhalb der Erweichungstemperatur. Dieses einer Kaltverformung vergleichbare Vorgehen hat den Vorteil, dass dünnere Folien, die zu exakterer Ausformung führen, verwendet werden können. Ein weiterer Vorteil sind kürzere Taktzeiten sowie eine geringere thermische Belastung der Beschichtung. Solche Verformungstemperaturen werden vorteilhafterweise in Kombination mit einem Hochdruckverformverfahren eingesetzt.

In einer weiteren Ausführungsform umfasst das Verfahren weiterhin den Schritt:
- Auftragen eines Polymers auf die der ausgehärteten Schicht entgegengesetzten Seite der Folie.

Die verformte beschichtete Folie kann vor oder bevorzugt nach der Endhärtung durch Verfahren wie zum Beispiel Hinterspritzen oder auch Hinterschäumen mit gegebenenfalls gefüllten Polymeren wie Thermoplasten oder auch reaktiven Polymeren wie Zweikomponenten-Polyurethansystemen modifiziert werden. Dabei kann wahlweise auch eine Klebschicht als Haftvermittler eingesetzt werden. Es entstehen Formkörper, die dort, wo ihre Oberfläche durch die gehärtete Beschichtung auf der Folie gebildet wird, über hervorragende Gebrauchseigenschaften verfügen.

Gegenstand der Erfindung ist weiterhin ein Formkörper, herstellbar durch ein Verfahren gemäß der vorliegenden Erfindung. Solche Formkörper können zum Beispiel Fahrzeuganbauteile, Kunststoffteile wie Blenden für den Fahrzeug(innen)bau und/oder Flugzeug(innen)bau, Möbelbau, elektronische Geräte, Kommunikationsgeräte, Gehäusen oder dekorativen Gegenstände sein.

### Beispiele

Die vorliegende Erfindung wird anhand der nachfolgenden Beispiele weiter erläutert. In diesen Beispielen haben die verwendeten Einheiten die folgende Bedeutung:
Säurezahl: Angabe mg KOH / g Probe, Titration mit 0,1 mol/l NaOH-Lösung gegen Bromthymolblau (ethanolische Lösung), Farbumschlag von gelb über grün nach blau, Grundlage DIN 3682.
Hydroxylzahl: Angabe in mg KOH / g Probe, Titration mit 0,1 mol/l meth. KOH-Lösung nach kalter Acetylierung mit Essigsäureanhydrid unter Katalyse von Dimethylaminopyridin, Grundlage DIN 53240.
Isocyanatgehalt: Angabe in %, Rücktitration mit 0,1 mol/l Salzsäure nach Reaktion mit Butylamin, Grundlage DIN EN ISO 11909.
Gelpermeationschromatographie (GPC): Elutionsmittel N,N-Dimethylacetamid, RI-Detektion, 30 °C, Integration nach Eichung mit Polystyrolstandards.
Viskositäten: Rotationsviskosimeter (Fa. Haake, Typ VT 550), Messungen bei 23°C und Schergefälle - soweit nicht anders vermerkt - D 1/40 s⁻¹.
Wenn nicht anderweitig vermerkt, handelt es sich bei Prozent-Angaben in den Beispielen um Gewichts-%.

In den Beispielen bedeuten die unter ihren Handelsnamen aufgeführten Verbindungen:
Laromer PE 44 F: Polyesteracrylat mit einer OH-Zahl von ungefähr 85 mg KOH/g
Desmodur W: cycloaliphatisches Diisocyanat (Methylen-bis-4-isocyanatocyclohexan)
Photomer 4399: Dipentaerythritol-monohydroxy-pentaacrylat
Bayhydrol XP2648: aliphatische, polycarbonathaltige anionische Polyurethandispersion, lösungsmittelfrei
Bindzil CC40: amorphe Kieselsäure, wäßrige kolloidale Lösung
Irgacure 500: Mischung zu gleichen Gewichts-Anteilen aus 1-Hydroxy-cyclohexyl-phenyl-keton und Benzophenon
TegoGlide 410: organomodifiziertes Polysiloxan
BYK 346: Lösung eines polyethermodifizierten Siloxans
Bayhydur 305: hydrophiles, aliphatisches Polyisocyanat auf Basis von Hexamethylendiisocyanat
DBTL: Dibutylzinndilaurat
DAA: Diacetonalkohol, 4-Hydroxy-4-methyl-pentan-2-on

### Bestimmung der Teilchengröße:

Die Teilchengrößen wurden mittels dynamischer Lichtstreuung mit einem HPPS particle size analyzer (Fa. Malvem, Worcestershire, UK) bestimmt. Die Auswertung erfolgte über die Dispersion Technology Software 4,10. Um Mehrfachstreuung zu vermeiden, wurde eine hochverdünnte Dispersion der Nanopartikel hergestellt. Ein Tropfen einer verdünnten Nanopartikeldispersion (ca. 0,1 - 10 %) wurde in eine Küvette enthaltend ca. 2 ml des gleichen Lösemittels wie die Dispersion gegeben, geschüttelt und im HPPS analyzer bei 20 bis 25 °C vermessen. Wie dem Fachmann allgemein bekannt, wurden vorher die relevanten Parameter des Dispergiermediums - Temperatur, Viskosität und Brechungsindex - in die Software eingegeben. Im Falle organischer Lösemittel wurde eine Glasküvette eingesetzt. Als Resultat wurde eine Intensitäts- bzw. Volumen- Teilchendurchmesser-Kurve sowie der Z-Mittelwert für den Teilchendurchmesser erhalten. Es wurde darauf geachtet, dass der Polydispersitätsindex < 0,5 war.

### Herstellung der erfindungsgemäßen UV-härtenden Polyurethandispersion UV-1:

In einem Reaktionsgefäß mit Rührer, Innenthermometer und Gaseinleitung (Luftstrom 1 1/h) wurden 471,9 Teile des Polyesteracrylats Laromer^{®} PE 44 F (BASF AG, Ludwigshafen, DE), 8,22 Teile Trimethylolpropan, 27,3 Teile Dimethylolpropionsäure, 199,7 Teile Desmodur^{®} W (cycloaliphatisches Diisocyanat; Bayer MaterialScience AG, Leverkusen, DE), und 0,6 Teile Dibutylzinndilaurat in 220 Teilen Aceton gelöst und bis zu einem NCO-Gehalt von 1,47 Gewichts-% bei 60 °C unter Rühren umgesetzt. Der so erhaltenen Präpolymer-Lösung wurden 115,0 Teile des Dipentaerythritol-monohydroxy-pentaacrylats Photomer^{®} 4399 (Cognis AG, Düsseldorf, DE), zugesetzt und untergerührt.

Anschließend wurde auf 40 °C abgekühlt und es wurden 19,53 g Triethylamin zugegeben. Nach 5 min Rühren bei 40 °C wurde die Reaktionsmischung unter schnellem Rühren in 1200 g Wasser von 20 °C gegossen. Anschließend wurden 9,32 g Ethylendiamin in 30,0 g Wasser zugefügt.

Nach 30 min Nachrühren ohne Heizen oder Kühlen wurde das Produkt im Vakuum (50 mbar, max. 50 °C) destilliert, bis ein Festkörper von 40±1 Gewichts-% erreicht wurde. Die Dispersion hatte einen pH-Wert von 8,7 und einen Z-Mittelwert für den Teilchendurchmesser von 130 nm. Die Auslaufzeit in einem 4 mm Becher betrug 18 s. Das gewichtsmittlere Molgewicht Mw des erhaltenen Polymers wurde zu 307840 g/mol bestimmt.

### Formulierungsbeispiele:

### Herstellung von Beschichtungsmitteln:

Die Herstellung der nachfolgend beschriebenen Beschichtungslösungen wurde in zwei Schritten vollzogen um eine einwandfreie Verträglichkeit aller Bestandteile zu gewährleisten.

Zuerst wurden in einem Rührgefäß mit Rührer und Rühraggregat die Lösungsmittel (LM) vorgelegt. Danach wurden bei 500 U/min die Additive (A) nacheinander zugegeben und solange gerührt, bis das jeweilige Additiv sich homogen gelöst hatte. Abschließend wurde für 5 min lang gerührt.

In einem zweiten Rührgefäß mit Rührer und Rühraggregat wurde ein Bindemittel (BM - Position 1 in den nachfolgenden Beispielen) vorgelegt. Danach wurden bei 500 U/min alle weiteren Bindemittel (BM), gegebenenfalls Nanopartikel (NP) und Vernetzer (V) nacheinander zugesetzt und jeweils für 5 min homogenisiert. Anschließend wurde die jeweilige Additivlösung unter stetigem Rühren zugesetzt und die Formulierung für weitere 10 min homogenisiert. Die derart hergestellten Beschichtungslösungen wurden vor der Applikation durch eine Filterkartusche (zum Beispiel Pall HDC^{®} II Filter - Porengröße 1,2 µm oder Sartorius Minisart^{®} Filter 17593 - Porengröße 1,2 µm) filtriert.

Die Funktion der genutzten Rohstoffe und ihre abkürzende Bezeichnung in den Beispielen wird in der nachfolgenden Tabelle weiter erläutert.

| Name | Hersteller | Abkürzung | Funktion |
|---|---|---|---|
| UV-1 | | BM | Bindemittel |
| Bayhydrol XP2648 | Bayer MaterialScience AG | BM | Bindemittel |
| Bindzil^{®} CC40 | Eka Chemicals AB | NP | Partikel |
| Irgacure 500 | Ciba AG | A | Photoinitiator |
| TegoGlide 410 | Evonik Tego Chemie GmbH | A | Verlaufsmittel |
| BYK 346 | BYK Chemie | A | Benetzungshilfsmittel |
| Diacetonalkohol | Kraemer & Martin GmbH | LM | Lösungsmittel |
| 2-Methoxypropanol | Kraemer & Martin GmbH | LM | Lösungsmittel |
| DBTL | Sigma Aldrich | A | Katalysator |
| Bayhydur 305 | Bayer MaterialScience AG | V | Vernetzer |
| | | | |

### Beispiel 1(nicht erfindungsgemäß):

### Formulierung eines wässrigen physikalisch trocknenden und UV-härtenden Beschichtungsmittels auf Basis von UV-1

| Position | | Edukt | Hersteller | Gehalt |
|---|---|---|---|---|
| 1 | BM | UV-1 | | 88,4 g |
| 2 | A | Irgacure 500 | Ciba AG | 0,8 g |
| 3 | A | TegoGlide 410 | Evonik Tego Chemie GmbH | 0,5 g |
| 4 | A | BYK 346 | BYK Chemie | 0,3 g |
| 5 | LM | Diacetonalkohol | Kraemer & Martin GmbH | 5,0 g |
| 6 | LM | 2-Methoxypropanol | Kraemer & Martin GmbH | 5,0 g |
| | | | Summe | 100,0 g |

### Beispiel 2:

### Formulierung eines wässrigen physikalisch trocknenden und UV-härtenden Beschichtungsmittels auf Basis von UV-1 und Zusatz von Bindzil^{®} CC40 (Eka Chemicals AB)

| Position | | Edukt | Hersteller | Gehalt |
|---|---|---|---|---|
| 1 | BM | UV-1 | | 61,8 g |
| 2 | NP | Bindzil^{®} CC40 | Eka Chemicals AB | 26,6 g |
| 3 | A | Irgacure 500 | Ciba AG | 0,8 g |
| 4 | A | TegoGlide 410 | Evonik Tego Chemie GmbH | 0,5 g |
| 5 | A | BYK 346 | BYK Chemie | 0,3 g |
| 6 | LM | Diacetonalkohol | Kraemer & Martin GmbH | 5,0 g |
| 7 | LM | 2-Methoxypropanol | Kraemer & Martin GmbH | 5,0 g |
| | | | Summe | 100,0 g |

### Beispiel 3:

### Formulierung eines wässrigen physikalisch trocknenden und UV-härtenden Beschichtungsmittels auf Basis von UV-1, Bayhydrol XP2648 (BMS AG) und Zusatz von Bindzil^{®} CC40 (Eka Chemicals AB)

| Position | | Edukt | Hersteller | Gehalt |
|---|---|---|---|---|
| 1 | BM | UV-1 | | 56,3 g |
| 2 | BM | Bayhydrol XP2648 | Bayer MaterialScience AG | 9,1 g |
| 3 | NP | Bindzil^{®} CC40 | Eka Chemicals AB | 24,2 g |
| 4 | A | Irgacure 500 | Ciba AG | 0,7 g |
| 5 | A | TegoGlide 410 | Evonik Tego Chemie GmbH | 0,4 g |
| 6 | A | BYK 346 | BYK Chemie | 0,3 g |
| 7 | LM | Diacetonalkohol | Kraemer & Martin GmbH | 4,5 g |
| 8 | LM | 2-Methoxypropanol | Kraemer & Martin GmbH | 4,5 g |
| | | | Summe | 100,0 g |

### Beispiel 4:

### Formulierung eines wässrigen physikalisch trocknenden und UV-härtenden Beschichtungsmittels auf Basis von UV-1, Bayhydrol XP2648 (BMS AG) und Zusatz von Bindzil^{®} CC40 (Eka Chemicals AB) enthaltend einen Polyisocyanatvernetzer Bayhydur^{®} 305 (BMS AG)

| Position | | Edukt | Hersteller | Gehalt |
|---|---|---|---|---|
| 1 | BM | UV-1 | | 54,8 g |
| 2 | BM | Bayhydrol XP2648 | Bayer MaterialScience AG | 8,9 g |
| 3 | NP | Bindzil^{®} CC40 | Eka Chemicals AB | 23,6 g |
| 4 | A | Irgacure 500 | Ciba AG | 0,7 g |
| 5 | A | TegoGlide 410 | Evonik Tego Chemie GmbH | 0,4 g |
| 6 | A | BYK 346 | BYK Chemie | 0,3 g |
| 7 | LM | Diacetonalkohol | Kraemer & Martin GmbH | 4,4 g |
| 8 | LM | 2-Methoxypropanol | Kraemer & Martin GmbH | 4,4 g |
| 9 | A | DBTL 1%ige Lsg. in DAA* | Sigma Aldrich | 0,9 g |
| 10 | V | Bayhydur 305 | Bayer MaterialScience AG | 1,6 g |
| | | | | 100,0 g |

### Beispiel 5 (nicht erfindungsgemäß):

### Klassisches lösungsmittelbasiertes dual-cure Beschichtungsmittel analog Beispiel 11 in EP 1790673/DE 102005057245.

### Beispiel 6 (nicht erfindungsgemäß):

### Kommerziell erhältliche beschichtete Folie Autoflex XtraForm™ der Firma MacDermid Autotype Ltd.

### Herstellung beschichteter und vorvernetzter Kunststofffolien:

Die Beispiele 1 bis 5 wurden mit einem handelsüblichen Rakel (Sollnassschichtdicke 100 µm) einseitig auf PC-Kunststofffolien (Makrofol^{®} DE1-1, Foliendicke 250 µm und 375 µm, Bogengröße DIN A4) aufgetragen. Nach einer Ablüftphase von 10 min bei 20 °C bis 25 °C wurden die lackierten Folien für 10 min bei 110 °C in einem Umluftofen getrocknet beziehungsweise vorvernetzt. Die derart hergestellten Lackfolien sowie Beispiel 6 waren daraufhin an dieser Stelle in der Prozesskette grifffest.

Herstellung von bedruckten Kunststofffolien:

Ein Teil dieser einseitig beschichteten PC-Kunststofffolien wurde mit einer physikalisch trocknenden, silbermetallic Siebdruckfarbe Noriphan^{®} HTR (Pröll KG, Weißenburg, DE) nach Angaben des Herstellers im Siebdruckverfahren (halbautomatische Siebdruckmaschine; Hersteller ESC (Europa Siebdruck Centrum); Gewebe 80 THT Polyester; RKS-Rakel; TrockenfilmSchichtdicke: 10-12 µm) bedruckt und im Tunneltrockner bei 80 °C und einer Durchlaufgeschwindigkeit von 2 m/min für 2,5 min getrocknet.

### Thermoformen:

Derartig beschichtete und bedruckte PC-Kunststofffolien wurden mit einem Werkzeug (Heizungs-Lüftungsblende zur Herstellung von Folien für den Automobilinnenausbau) auf einer Thermoformanlage (Adolf ILLIG, Heilbronn) geformt. Die wesentlichen Prozessparameter der Verformung sind nachfolgend angeführt:

| | |
|---|---|
| Werkzeugtemperatur: | 100 °C bei Makrofol^{®} DE1-1 |
| Folientemperatur: | 190 °C bei Makrofol^{®} DE1-1 |
| Heizzeit: | 20 s bei Makrofol^{®} DE1-1 |

### Hochdruckverformverfahren:

Analog erfolgte die Verformung der PC-Kunststofffolien mit dem beschriebenen Werkzeug (Heizungs-Lüftungsblende zur Herstellung von Folien für den Automobilinnenausbau) auf einer HPF-Anlage (HDVF Penzberg, Kunststoffmaschinen (Typ: SAMK 360)). Die wesentlichen Prozessparameter der Verformung sind nachfolgend angeführt:

| | |
|---|---|
| Werkzeugtemperatur: | 100 °C bei Makrofol^{®} DE1-1 |
| Folientemperatur: | 140 °C bei Makrofol^{®} DE1-1 |
| Heizzeit: | 16 s bei Makrofol^{®} DE1-1 |
| Druck: | 100 bar |

### Aushärtung der verformten Lackfolien durch UV-Strahlung:

Die UV-Härtung der verformten Lackfolien wurde mittels einer UV-Anlage Typ U300-M-1-TR der Firma IST Strahlentechnik GmbH, Nürtingen mit einer Quecksilberlampe Typ MC200 (Leistung 80 W/cm) durchgeführt. Die zur Aushärtung benötigte Dosis wurde mit einem Dosimeter eta plus UMD-1 der Firma eta plus electronic ermittelt. Bei einer Durchlaufhärtungsgeschwindigkeit von 3 m/min und 3 Durchläufen durch die beschriebene UV-Anlage wurde eine Gesamtstrahlungsintensität von 3 x 1,2 J/cm², also von 3,6 J/cm² zur Aushärtung der Lackfolien genutzt.

### Herstellung von Formteilen durch Hinterspritzen der Lackfolien:

Die dreidimensionalen, UV-gehärteten Kunststofffolien wurden mittels einer Spritzgussanlage Typ Allrounder 570C (2000-675) der Firma Arburg, Loßburg mit Bayblend® T65 (amorphes, thermoplastisches Polymerblend auf Basis von Polycarbonat und ABS; Bayer MaterialScience AG, Leverkusen, DE) hinterspritzt. Die wesentlichen Parameter des Hinterspritzens sind nachfolgend angeführt:

| | |
|---|---|
| Spritztemperatur: | 260 °C Masse |
| Werkzeugtemperatur: | 60 °C |
| Einspritzdruck: | 1400 bar |
| Füllzeit: | 2 s |

### Prüfmethoden:

### Abriebbeständigkeit mittels Taber Abrasion Tester und Streulichtmessung nach DIN 52347:

Aus der zuvor durch aktinische Strahlung gehärteten beschichteten Folie wurde ein flacher Prüfkörper mit den Maßen 100 mm x 100 mm präpariert. Der Anfangs-Haze-Wert dieses Prüfköpers wurde gemäß ASTM D 1003 mit einem Haze Gard Plus der Firma BYK-Gardner bestimmt. Anschließend wurde die beschichtete Seite des Prüfkörpers mittels eines Taber Abraser Modell 5131 der Firma Erichsen gemäß DIN 52347 bzw. ASTM D1044 unter Verwendung der CS10F Räder (Typ IV; graue Farbe) und 500 g Auflagegewicht pro Reibrad verkratzt. Durch Bestimmung des End-Haze-Wertes nach 25, 100, 500 und 1000 Umdrehungen ließen sich Δhaze-Werte des Prüfkörpers aus der Differenz von End-Haze-Wert bei gegebener Umdrehungsanzahl und Anfangs-Haze Wert ermitteln.

### Kratzbeständigkeit mittels Bleistift-Härteprüfer nach ISO 15184/ASTM D3363:

Aus der zuvor durch aktinische Strahlung gehärteten beschichteten Folie wurde ein flacher Prüfkörper präpariert und auf einer Glasplatte fixiert. Die Bleistifthärte wurde unter Verwendung des Bleistift-Härteprüfers nach Wolf-Wilburn der Firma BYK-Gardner und Bleistiften der Firma Cretacolor ermittelt. Hierbei wurde in Anlehnung an ISO 15184 die Bezeichnung des Bleistifts angegeben, der in der Prüfanordnung bei einem Druck von 750 g unter einem Winkel von 45° gerade keine Oberflächenverletzung mehr verursacht.

### Haftfestigkeit mittels Gitterschnittprüfung nach EN ISO 2409/ASTM D3359:

Es wurde die Haftfestigkeit der nur vorgetrockneten Lackschicht der beschichteten Lackfolie sowie die Haftfestigkeit der durch aktinische Strahlung ausgehärteten Beschichtung auf der Lackfolie ermittelt. Beurteilt wurde
a.) der Gitterschnitt mit und ohne Klebebandabriss (verwendetes Klebeband: Scotch^{™} 610-1PK von 3M), sowie
b.) der Gitterschnitt nach Lagerung in 98 °C heißem Wasser nach Klebebandabriss (verwendetes Klebeband siehe oben) für eine Gesamtdauer von 4 Stunden, wobei die Beurteilung nach jeder Stunde erfolgte.

### Chemikalienbeständigkeit:

Das geformte, durch aktinische Strahlung ausgehärtete sowie mit thermoplastischem Material (zum Beispiel Bayblend T65) hinterspritzte Bauteil (Heizungslüftungsblende eines Automobils) weist kritische Verformungsradien von bis zu r = 0,8 mm auf. Die Chemikalienbeständigkeit an diesen stark verformten und unter Spannung stehenden Bereichen dünner Lackschichtdicke wurde wie folgt untersucht. Dem Fachmann bekannte agressive Lotionen und Cremes (zum Beispiel Atrix - Handcreme, Daimler Chrysler AG - Sönnenöltestgemisch DBL7384, Garnier - Ambre Solaire Kinder SF30 und Nivea Sun - pflegende Sonnenmilch Kinder SF30) wurden auf die beschriebenen Stellen aufgebracht und dann für 24 Stunden bei 80 °C in einem Heizschrank gelagert. Nach der erfolgten Belastung wurden Rückstände vorsichtig mit Wasser entfernt und die Proben getrocknet. Es erfolgte eine visuelle Beurteilung der Oberfläche in der Einwirkzone.

### Blockfestigkeit:

Zur Simulation der Blockfestigkeit von aufgerollten vorgetrockneten Lackfolien reichen klassische Prüfmethoden wie etwa in DIN 53150 beschrieben nicht aus, weshalb nachfolgende Prüfung vollzogen wurde. Die Lackmaterialien wurden mit einem handelsüblichen Rakel (Sollnassschichtdicke 100 µm) auf Makrofol DE 1-1 Folien (375 µm) aufgetragen. Nach einer Ablüftphase von 10 min bei 20 °C bis 25 °C wurden die lackierten Folien für 10 min bei 110 °C in einem Umluftofen getrocknet. Nach einer Abkühlphase von 1 min wurde eine handelsübliche Haftkaschierfolie GH-X173 natur (Firma Bischof und Klein, Lengerich, Deutschland) mit einer Kunststofffarbwalze auf eine Fläche von 100 mm x 100mm faltenfrei auf der getrockneten Lackfolie aufgebracht. Anschließend wurde das kaschierte Folienstück flächig mit einem 10 kg Gewicht für 1 Stunde belastet. Danach wurde die Kaschierfolie entfernt und die Lackoberfläche visuell beurteilt.

### Schichtdicke der Lackschicht:

Die Schichtdicke der durch aktinische Strahlung ausgehärteten Lackschichten wurde mit einem Weißlichtinterferometer ETA-SST der Firma ETA-Optik GmbH ermittelt.

### Ergebnisse:

Die Ergebnisse der Prüfungen sind in den nachfolgenden beiden Tabelle dargestellt.

| | Beispiel | 1 | 2 | 3 | 4 | 5 | 6 |
|---|---|---|---|---|---|---|---|
| Schichtdicke [µm] | | 23,0 | 24,0 | 22,0 | 22,0 | 31,0 | 7,5 |
| Transparenz [%] | | 90,2 | 90,1 | 90,1 | 90,1 | 90,1 | 92,6 |
| Haze [%] | | 0,5 | 0,6 | 0,7 | 0,5 | 0,4 | 1,1 |
| Abriebbeständigkeit | 25 Zyklen | 3,8 | 2,4 | 3,9 | 4,7 | 10,8 | 2,9 |
| (Δ-Haze Werte) | 100 Zyklen | 7,7 | 6,8 | 7,3 | 9,3 | 22,2 | 4,4 |
| [%] | 500 Zyklen | 18,0 | 7,3 | 7,5 | 9,6 | 43,4 | 20,5 |
| | 1000 Zyklen | 24,5 | 5,9 | 5,7 | 7,3 | 53,7 | 22,4 |
| Bleistifthärte | 750 g Last | 2H | 2H | 2H | 2H | H | 2H |
| Haftung nach der | GS | 0 | 0 | 0 | 0 | 0 | 0 |
| UV-Härtung | KBA | 0 | 0 | 0 | 0 | 0 | 0 |
| | KBA (1Std. KT) | 0 | 0 | 0 | 0 | 5 | 5 |
| | KBA (2Std. KT) | 0 | 0 | 0 | 0 | - | - |
| | KBA (4Std. KT) | 0 | 0 | 0 | 0 | - | - |

| | | | | | | | |
|---|---|---|---|---|---|---|---|
| Legende: GS: Gitterschnitt; KBA: Klebebandabriss; KT: KBA nach n Stunden Lagerung in 98 °C heißem Wasser. Beurteilung des Gitterschnitts: Skala von 0 bis 5, wobei 0 eine sehr gute Haftung und 5 eine nahezu vollständige Delamination der Lackschicht bedeuten. | | | | | | | |

| | Chemikalienbeständigkeit - Lagerung nach 24 Std. bei 80 °C | | | | Blockfestigkeit |
|---|---|---|---|---|---|
| Beispiel | Atrix-Handcreme | DC AG - Sonnenöltestgemisch DBL7384 | Garnier-Ambre Solaire Kinder SF30 | Nivea Sun - pflegende Sonnenmilch Kinder SF30 | Belastung mit GH-X173 und 10 kg auf einer Folienfläche von 100 mm × 100 mm |
| 1 | i.O. | i.O. | i.O. | Delamination, starke Rissbildung | starke Markierungen |
| 2 | i.O. | i.O. | i.O. | i.O. | leichte Markierungen |
| 3 | i.O. | i.O. | i.O. | i.O. | keine Markierungen |
| 4 | i.O. | i.O. | i.O. | i.O. | keine Markierungen |
| 5 | i.O. | i.O. | Delamination, starke Rissbildung | Delamination, starke Rissbildung | starke Markierungen |
| 6 | i.O. | leichte Rissbildung | starke Rissbildung | i.O. | wird mit ausreichender Blockfestigkeit vom Hersteller geliefert |

### Fazit:

Die Prüfergebnisse zeigen, dass durch das erfindungsgemäße Beschichtungsmittel (Beispiele 2 bis 4) und Verfahren Oberflächen auf verformten Folien mit hervorragenden Beständigkeiten gegenüber Chemikalien bei erhöhten Temperaturen bis 80 °C erzielt werden können. Weiterhin werden ausgezeichnete Abriebfestigkeiten und Kratzfestigkeiten auch bei langanhaltender Belastung bei gleichbleibend hoher Transparenz der Folie erreicht. Die Blockfestigkeit der beschichteten, aber nicht UV-gehärteten Folie ist deutlich besser als die des Standes der Technik (Beispiele 5 + 6) beziehungsweise als bei einer Folie ohne anorganische Nanopartikel in der Beschichtung (Beispiel 1), so dass das wirtschaftlich entscheidende Verfahren der Folienbeschichtung von Rolle zu Rolle mit direkter Kaschierung der nicht UV-gehärteten Lackfolie zum Einsatz kommen kann.

## Patentansprüche

1. Folie enthaltend wenigstens ein thermoplastisches Polymer ausgewählt aus thermoplastischem Polyurethan, Polymethylmethacrylat (PMMA) sowie modifizierte Varianten von PMMA, Polycarbonat (PC), Acrylnitril-Styrol-Acrylester-Copolymerisaten (ASA) und AcrylnitrilButadien-Styrol-Copolymerisaten (ABS), weiterhin umfassend eine strahlungshärtbare Beschichtung, wobei die Beschichtung ein Polyurethanpolymer umfasst, welches (Meth)acrylatgruppen aufweist und welches erhältlich ist aus der Reaktion einer Reaktionsmischung umfassend:
(a) Polyisocyanate und
(b1) (Meth)acrylatgruppen umfassende und gegenüber Isocyanaten reaktive Verbindungen
wobei das Gewichtsmittel Mw des Polyurethanpolymers bestimmt mittels Gelpermeationschromatographie in einem Bereich von ≥ 250000 g/mol bis ≤ 350000 g/mol liegt und die Beschichtung weiterhin anorganische Nanopartikel ausgewählt aus der Gruppe der Oxide Siliziumoxid, Aluminiumoxid, Ceroxid, Zirkonoxid, Nioboxid und Titanoxid mit einer mittleren Teilchengröße bestimmt mittels dynamischer Lichtstreuung mit einem High Performance Particle Sizer (HPPS), wie in der Beschreibung offenbart, von ≥ 1 nm bis ≤ 200 nm umfasst.

2. Folie gemäß Anspruch 1, wobei die Folie eine Polycarbonatfolie mit einer Dicke von ≥ 10 µm bis ≤ 1500 µm ist.

3. Folie gemäß Anspruch 1, wobei das Gewichtsmittel Mw des Polyurethanpolymers in einem Bereich von ≥ 280000 g/mol bis ≤ 320000 g/mol liegt.

4. Folie gemäß Anspruch 1, wobei die Reaktionsmischung weiterhin die folgenden Komponenten umfasst:
(b2) hydrophilierend wirkende Verbindungen mit ionischen und/oder in ionische Gruppen überführbare Gruppen und/oder nichtionischen Gruppen
(b3) Polyolverbindungen mit einem mittleren Molekulargewicht von ≥ 50 g/mol bis ≤ 500 g/mol und einer Hydroxylfunktionalität von ≥ 2 und
(b4) aminofunktionelle Verbindungen.

5. Folie gemäß Anspruch 4, wobei die Reaktionsmischung weiterhin die folgende Komponente umfasst:
(b5) Polyolverbindungen mit einem mittleren Molekulargewicht von ≥ 500 g/mol bis ≤ 13000 g/mol und einer mittleren Hydroxylfunktionalität von ≥ 1,5 bis ≤ 5.

6. Folie gemäß Anspruch 4 oder 5, wobei in der Reaktionsmischung die Anzahl der Hydroxylgruppen in der Komponente (b3) einen Anteil an der Gesamtmenge der Hydroxylgruppen und Aminogruppen von ≥ 5 mol-% bis ≤ 25 mol-% aufweist und wobei die Hydroxylgruppen von Wasser in der Reaktionsmischung hierbei nicht berücksichtigt werden.

7. Folie gemäß Anspruch 1, wobei die Beschichtung weiterhin die folgende Komponente umfasst:
(b6) (Meth)acrylatgruppen umfassende und gegenüber Isocyanaten nicht reaktive und/oder nicht zur Reaktion gebrachte Verbindungen.

8. Folie gemäß Anspruch 1, wobei die Oberfläche der Nanopartikel in der Beschichtung durch die kovalente und/oder nicht kovalente Anbindung von weiteren Verbindungen modifiziert ist.

9. Verfahren zur Herstellung von beschichteten Folien gemäß Anspruch 1, umfassend die Schritte:
- Bereitstellen einer Polymerdispersion, wobei die Dispersion ein Polyurethanpolymer umfasst, welches (Meth)acrylatgruppen aufweist und welches erhältlich ist aus der Reaktion einer Reaktionsmischung umfassend:
(a) Polyisocyanate und
(b1) (Meth)acrylatgruppen umfassende und gegenüber Isocyanaten reaktive Verbindungen
wobei das Gewichtsmittel Mw des Polyurethanpolymers bestimmt mittels Gelpermeationschromatographie in einem Bereich von ≥ 250000 g/mol bis ≤ 350000 g/mol liegt und wobei die Dispersion weiterhin anorganische Nanopartikel ausgewählt aus der Gruppe der Oxide Siliziumoxid, Aluminiumoxid, Ceroxid, Zirkonoxid, Nioboxid und Titanoxid mit einer mittleren Teilchengröße bestimmt mittels dynamischer Lichtstreuung mit einem High Performance Particle Sizer (HPPS), wie in der Beschreibung offenbart, von ≥ 1 nm bis ≤ 200 nm umfasst
- Beschichten einer Folie enthaltend wenigstens ein thermoplastisches Polymer ausgewählt aus thermoplastischem Polyurethan, Polymethylmethacrylat (PMMA) sowie modifizierte Varianten von PMMA, Polycarbonat (PC), Acrylnitril-Styrol-Acrylester-Copolymerisaten (ASA) und Acrylnitril-Butadien-Styrol-Copolymerisaten (ABS) mit der Polymerdispersion
- Trocknen der Polymerdispersion.

10. Verwendung von beschichteten Folien gemäß Anspruch 1 zur Herstellung von Formkörpern.

11. Verfahren zur Herstellung von Formkörpern mit einer strahlungsgehärteten Beschichtung, umfassend die Schritte:
- Bereitstellen einer beschichteten Folie gemäß Anspruch 1
- Formen des Formkörpers
- Härten der strahlungshärtbaren Beschichtung.

12. Verfahren gemäß Anspruch 11, wobei das Formen des Formkörpers in einem Werkzeug bei einem Druck von ≥ 20 bar bis ≤ 150 bar erfolgt.

13. Verfahren gemäß Anspruch 11, wobei das Formen des Formkörpers bei einer Temperatur von 20 °C bis ≤ 60 °C unterhalb der Erweichungstemperatur des Materials der Folie stattfindet.

14. Verfahren gemäß Anspruch 11, weiterhin umfassend den Schritt:
- Auftragen eines Polymers auf die der ausgehärteten Schicht entgegengesetzten Seite der Folie.

15. Formkörper, herstellbar durch ein Verfahren gemäß Anspruch 11.

## Claims

1. Foil comprising at least one thermoplastic polymer selected from thermoplastic polyurethane, polymethyl methacrylate (PMMA) and modified variants of PMMA, polycarbonate (PC), acrylonitrile-styrene-acrylate copolymers (ASA) and acrylonitrile-butadiene-styrene copolymers (ABS), and moreover comprising a radiation-curable coating, where the coating comprises a polyurethane polymer which has (meth)acrylate groups and which is attainable from the reaction of a reaction mixture comprising:
(a) polyisocynates and
(b1) compounds which are reactive towards isocyanates and which comprise (meth)acrylate groups
where the weight average Mw of the polyurethane polymer determined by means of gel permeation chromatography is in the range from ≥ 250 000 g/mol to ≤ 350 000 g/mol and the coating moreover comprises inorganic nanoparticles selected from the group of the oxides silicon oxide, aluminium oxide, cerium oxide, zirconium oxide, niobium oxide and titanium oxide with an average particle size of from ≥ 1 nm to ≤ 200 nm determined by means of dynamic light scattering with a high performance particle sizer (HPPS), as disclosed in the description.

2. Foil according to Claim 1, where the foil is a polycarbonate foil with a thickness of from ≥ 10 µm to ≤ 1500 µm.

3. Foil according to Claim 1, where the weight average Mw of the polyurethane polymer is in the range from ≥ 280 000 g/mol to ≤ 320 000 g/mol.

4. Foil according to Claim 1, where the reaction mixture moreover comprises the following components:
(b2) compounds which have hydrophilizing effect and which have ionic groups and/or have groups convertible to ionic groups, and/or have non-ionic groups
(b3) polyol compounds with an average molar mass of from ≥ 50 g/mol to ≤ 500 g/mol and with a hydroxy functionality of ≥ 2 and
(b4) amino-functional compounds.

5. Foil according to Claim 4, where the reaction mixture moreover comprises the following component:
(b5) polyol compounds with an average molar mass of from ≥ 500 g/mol to ≤ 13 000 g/mol and with an average hydroxy functionality of from ≥ 1.5 to ≤ 5.

6. Foil according to Claim 4 or 5, where the number of hydroxy groups in component (b3) in the reaction mixture, expressed as a proportion of the total amount of hydroxy groups and amino groups, is from ≥ 5 mol% to ≤ 25 mol%, and where the hydroxy groups of water in the reaction mixture are not taken into account here.

7. Foil according to Claim 1, where the coating moreover comprises the following component:
(b6) compounds which are unreactive towards isocyanates and/or remain unreacted and which comprise (meth)acrylate groups.

8. Foil according to Claim 1, where covalent and/or non-covalent linkage of other compounds modifies the surface of the nanoparticles in the coating.

9. Process for the production of coated foils according to Claim 1, comprising the following steps:
- provision of a polymer dispersion, where the dispersion comprises a polyurethane polymer which has (meth)acrylate groups and which is obtainable from the reaction of a reaction mixture comprising:
(a) polyisocynates and
(b1) compounds which are reactive towards isocyanates and which comprise (meth)acrylate groups
where the weight average Mw of the polyurethane polymer determined by means of gel permeation chromatography is in the range from ≥ 250 000 g/mol to ≤ 350 000 g/mol and the coating moreover comprises inorganic nanoparticles selected from the group of the oxides silicon oxide, aluminium oxide, cerium oxide, zirconium oxide, niobium oxide and titanium oxide with an average particle size of from ≥ 1 nm to ≤ 200 nm determined by means of dynamic light scattering with a high performance particle sizer (HPPS), as disclosed in the description,
- coating of a foil comprising at least one thermoplastic polymer selected from thermoplastic polyurethane, polymethyl methacrylate (PMMA) and modified variants of PMMA, polycarbonate (PC), acrylonitrile-styrene-acrylate copolymers (ASA) and acrylonitrile-butadiene-styrene copolymers (ABS) with the polymer dispersion,
- drying of the polymer dispersion.

10. Use of coated foils according to Claim 1 for the production of moulded products.

11. Process for the production of moulded products with a radiation-cured coating, comprising the following steps:
- provision of a coated foil according to Claim 1,
- moulding of the moulded product,
- curing of the radiation-curable coating.

12. Process according to Claim 11, where the moulding of the moulded product takes place in a mould at a pressure of from ≥ 20 bar to ≤ 150 bar.

13. Process according to Claim 11, where the moulding of the moulded product takes place at a temperature of from ≥ 20°C to ≤ 60°C below the softening point of the material of the foil.

14. Process according to Claim 11, moreover comprising the following step:
- application of a polymer to that side of the foil that is opposite to the hardened layer.

15. Moulded product that can be produced by a process according to Claim 11.

## Revendications

1. Film contenant au moins un polymère thermoplastique choisi parmi le polyuréthane thermoplastique, le poly(méthacrylate de méthyle) (PMMA) ainsi que des variantes modifiées de PMMA, le polycarbonate (PC), des copolymérisats acrylonitrile-styrène-ester acrylique (ASA) et des copolymérisats acrylonitrile-butadiène-styrène (ABS), en outre comprenant un revêtement durcissable par irradiation, le revêtement comprenant un polymère polyuréthane qui comporte des groupes (méth)acrylate et qui peut être obtenu par la réaction d'un mélange réactionnel comprenant :
(a) des polyisocyanates et
(b1) des composés réactifs vis-à-vis d'isocyanates et comprenant des groupes (méth)acrylate
dans lequel la moyenne en poids Mw du polymère polyuréthane, déterminée par chromatographie par perméation de gel, se situe dans une plage allant de ≥ 250 000 g/mole à ≤ 350 000 g/mole et le revêtement comprend en outre des nanoparticules inorganiques choisies dans le groupe des oxydes oxyde de silicium, oxyde d'aluminium, oxyde de cérium, oxyde de zirconium, oxyde de niobium et oxyde de titane ayant une taille moyenne de particule, déterminée par diffusion dynamique de la lumière au moyen d'un High Performance Particle Sizer (HPPS), comme révélé dans la description, de ≥ 1 nm à ≤ 200 nm.

2. Film selon la revendication 1, le film étant un film de polycarbonate ayant une épaisseur de ≥ 10 µm à ≤ 1 500 µm.

3. Film selon la revendication 1, dans lequel la moyenne en poids Mw du polymère polyuréthane se situe dans une plage allant de ≥ 280 000 g/mole à ≤ 320 000 g/mole.

4. Film selon la revendication 1, dans lequel le mélange réactionnel comprend en outre les composants suivants :
(b2) des composés à action hydrophilisante, comportant de groupes ioniques et/ou convertissables en groupes ioniques et/ou des groupes non ioniques
(b3) des composés polyol ayant une masse moléculaire moyenne de ≥ 50 g/mole à ≤ 500 g/mole et une fonctionnalité hydroxy de ≥ 2 et
(b4) des composés à fonction amino.

5. Film selon la revendication 4, dans lequel le mélange réactionnel comprend en outre les composants suivants :
(b5) des composés polyol ayant une masse moléculaire moyenne de ≥ 500 g/mole à ≤ 13 000 g/mole et une fonctionnalité hydroxy moyenne de ≥ 1,5 à ≤ 5.

6. Film selon la revendication 4 ou 5, dans lequel dans le mélange réactionnel le nombre des groupes hydroxy dans le composant (b3) représente une proportion de la quantité totale des groupes hydroxy et des groupes amino de ≥ 5 % en moles à ≤ 25 % en moles et les groupes hydroxy de l'eau dans le mélange réactionnel n'étant pas pris en considération dans cette quantité.

7. Film selon la revendication 1, dans lequel le revêtement comporte en outre les composants suivants :
(b6) des composés non mis en réaction et/ou non réactifs vis-à-vis d'isocyanates et comprenant des groupes (méth)acrylate.

8. Film selon la revendication 1, dans lequel la surface des nanoparticules dans le revêtement est modifiée par l'attachement par liaison covalente et/ou non covalente d'autres composés.

9. Procédé pour la production de films revêtus selon la revendication 1, comprenant les étapes :
- disposition d'une dispersion de polymère, la dispersion comprenant un polymère polyuréthane qui comporte des groupes (méth)acrylate et qui peut être obtenu par la réaction d'un mélange réactionnel comprenant :
(a) des polyisocyanates et
(b1) des composés réactifs vis-à-vis d'isocyanates et comprenant des groupes (méth)acrylate
la moyenne en poids Mw du polymère polyuréthane, déterminée par chromatographie par perméation de gel, se situant dans une plage allant de ≥ 250 000 g/mole à 350 000 g/mole et la dispersion comprenant en outre des nanoparticules inorganiques choisies dans le groupe des oxydes oxyde de silicium, oxyde d'aluminium, oxyde de cérium, oxyde de zirconium, oxyde de niobium et oxyde de titane ayant une taille moyenne de particule, déterminée par diffusion dynamique de la lumière au moyen d'un High Performance Particle Sizer (HPPS), comme révélé dans la description, de ≥ 1 nm à ≤ 200 nm,
- revêtement avec la dispersion de polymère d'un film contenant au moins un polymère thermoplastique, choisi parmi le polyuréthane thermoplastique, le poly(méthacrylate de méthyle) (PMMA) ainsi que des variantes modifiées de PMMA, le polycarbonate (PC), des copolymérisats acrylonitrile-styrène-ester acrylique (ASA) et des copolymérisats acrylonitrile-butadiène-styrène (ABS)
- séchage de la dispersion de polymère.

10. Utilisation de films revêtus selon la revendication 1, pour la production de corps moulés.

11. Procédé pour la production de corps moulés comportant un revêtement durcissable par irradiation, comprenant les étapes :
- disposition d'un film revêtu selon la revendication 1
- mis en forme du corps moulé
- durcissement du revêtement durci par irradiation.

12. Procédé selon la revendication 11, dans lequel la mise en forme du corps moulé s'effectue dans un outil sous une pression de ≥ 20 bars à ≤ 150 bars.

13. Procédé selon la revendication 11, dans lequel la mise en forme du corps moulé s'effectue à une température de ≥ 20 °C à ≤ 60 °C au-dessous de la température de ramollissement du matériau du film.

14. Procédé selon la revendication 11, en outre comprenant l'étape :
- application d'un polymère sur la face opposée à la couche durcie du film.

15. Corps moulé, pouvant être produit par un procédé selon la revendication 11.
